# EUROPEAN PATENT APPLICATION

(11) **EP 4 280 739 A1**
(43) Date of publication of application: **22.11.2023**
(21) Application number: 21918325.8
(22) Date of filing: 13.01.2021
(51) Int. Cl.: H04W 72/04

(54) **METHOD AND APPARATUS FOR GENERATING AND REPORTING BEAM FAILURE INFORMATION**

(71) Applicant: Fujitsu Limited, Kawasaki-shi, Kanagawa 211-8588 (JP)
(72) Inventor: JIA, Meiyi, Beijing 100022 (CN); CHEN, Zhe, Beijing 100022 (CN); LI, Guorong, Beijing 100022 (CN)
(74) Representative: Haseltine Lake Kempner LLP
(86) International application number: PCT/CN2021/071618
(87) International publication number: WO 2022/151110

(57) **Abstract**

The embodiments of the present disclosure provide a method and an apparatus for generating and reporting beam failure information. The method includes: detecting, by a terminal device, that a beam failure occurs in a link with a transmission reception point (TRP) or beam failure recovery of the transmission reception point is triggered; and generating a medium access control (MAC) control element (CE), wherein the MAC CE indicates information of the transmission reception point in which beam failure is detected or for which beam failure recovery is triggered.

## Description

### Technical Field

The embodiments of the present disclosure relate to the communication technology field.

### Background

In a New Radio (NR) system, transmission and reception of a beam are supported, and management of a plurality of beams is supported. A terminal equipment may perform a Beam Failure Detection (BFD) procedure and a Beam Failure Recovery (BFR) procedure. During the beam failure detection procedure, a MAC entity of a Media Access Control (MAC) layer of the terminal equipment detects a beam failure and/or triggers beam failure recovery by counting beam failure instance indications provided by a lower layer (for example, a physical layer) to the MAC entity.

For example, the beam failure detection procedure uses a user equipment (UE) variable *BFI_COUNTER,* which is a counter for the beam failure instance indication, initially set to 0, with one *BFI_COUNTER* per serving cell. For each serving cell configured with beam failure detection, the MAC entity will execute the following operations:
if a beam failure instance indication has been received from the lower layer, a beam failure detection timer (*beamFailureDetectionTimer*) is started or restarted; the UE variable (*BFI_COUNTER*) is incremented by 1; in a case where *BFI_COUNTER* is greater than or equal to a beam failure instance maximum count value (*beamFailureInstanceMaxCount*)*,* if the serving cell is a secondary cell (SCell), a Beam Failure Recovery (BFR) of the serving cell is triggered, otherwise a random access procedure is initiated on a special cell (SpCell); The *BFI_COUNTER* is set to 0 if *beamFailureDetectionTimer* expires or if *beamFailureDetectionTimer, beamFailure InstanceMaxCount* or any of reference signal for beam failure detection associated with this serving cell is reconfigured by higher layers.

For each serving cell, the MAC entity may be configured by Radio Resource Control (RRC) with a beam failure recovery procedure. When beam failure is detected on serving Synchronization Signal Block(s) (SSBs)/Channel State Information Reference Signal(s) (CSI-RSs), a new SSB or CSI-RS is indicated to a service network device (for example, gNB).

When a MAC Protocol Data Unit (PDU) is transmitted by a terminal equipment to a network device and the MAC PDU includes a BFR MAC control element (CE) or a truncated BFR MAC CE for which contains beam failure information of a secondary cell, the terminal equipment shall cancel all BFRs triggered for beam failure recovery in the secondary cell before the MAC PDU assembly.

In the beam failure recovery procedure, the MAC entity will execute the following operations:
if the beam failure recovery procedure determines that at least one BFR has been triggered and not cancelled, an evaluation of its candidate beam has been completed according to the requirements:
if uplink resources (UL-SCH resources) are available for a new transmission and if the uplink resources can accommodate a BFR MAC CE plus a subheader as a result of Logical Channel Prioritization (LCP), instruct a multiplexing and assembly procedure to generate the BFR MAC CE;
if the uplink resources are available for a new transmission and if the uplink resources can accommodate a Truncated BFR MAC CE plus a subheader as a result of LCP, instruct a multiplexing and assembly procedure to generate the Truncated BFR MAC CE;
else, trigger a Scheduling Request (SR) for each secondary cell for which the BFR has been triggered and not cancelled, and for which the evaluation of its candidate beams has been completed according to the requirements.

Therefore, the beam failure information of the secondary cell may be carried by the BFR MAC CE or the Truncated BFR MAC CE (hereinafter referred to as (Truncated) BFR MAC CE) and transmitted by the terminal equipment to the network device.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### Summary

However, the inventors found that: in multiple transmission reception points (TRPs) operation, if information provided by a terminal equipment to a network device contains whether a secondary cell transmits a beam failure or candidate beam information, etc., the network device is unable to determine which TRP has suffered a beam failure according to such information, and possibly takes the same step as that of dealing with a cell beam failure, resulting in a waste of resources.

For at least one of the above problems, the embodiments of the present disclosure provide a method and an apparatus for generating and reporting beam failure information.

According to one aspect of the embodiments of the present disclosure, a method for generating beam failure information is provided, including:
detecting, by a terminal equipment, that a beam failure occurs in a link with a transmission reception point (TRP) or beam failure recovery of the transmission reception point is triggered; and
generating, by the terminal equipment, a medium access control (MAC) control element (CE), wherein the MAC CE indicates information of the transmission reception point in which beam failure is detected or for which beam failure recovery is triggered.

According to another aspect of the embodiments of the present disclosure, an apparatus for generating beam failure information is provided, including:
a detecting unit configured to detect that a beam failure occurs in a link with a transmission reception point (TRP) or beam failure recovery of the transmission reception point is triggered; and
a processing unit configured to generate a medium access control (MAC) control element (CE), wherein the MAC CE indicates information of the transmission reception point in which beam failure is detected or for which beam failure recovery is triggered.

According to another aspect of the embodiments of the present disclosure, a method for reporting beam failure information is provided, including:
detecting, by a terminal equipment, that a beam failure occurs in a link with a transmission reception point or beam failure recovery of the transmission reception point is triggered; and
indicating, by the terminal equipment to a network device, information that a beam failure is detected or beam failure recovery is triggered via another transmission reception point of a cell to which the transmission reception point belongs.

According to another aspect of the embodiments of the present disclosure, an apparatus for reporting beam failure information is provided, including:
a detecting unit configured to detect that a beam failure occurs in a link with a transmission reception point or beam failure recovery of the transmission reception point is triggered; and
a transmitting unit configured to indicate to a network device information that a beam failure is detected or beam failure recovery is triggered via another transmission reception point of a cell to which the transmission reception point belongs.

According to another aspect of the embodiments of the present disclosure, a method for reporting beam failure information is provided, including:
detecting, by a terminal equipment, that a beam failure occurs in a link with a transmission reception point or beam failure recovery of the transmission reception point is triggered; and
reporting a MAC CE, by the terminal equipment, to a network device according to configuration of carrier aggregation (CA) and/or uplink resources, wherein the MAC CE indicates information of the transmission reception point where beam failure is detected or for which beam failure recovery is triggered, or indicates to a network device information that a beam failure is detected or beam failure recovery is triggered via another transmission reception point of a cell to which the transmission reception point belongs.

According to another aspect of the embodiments of the present disclosure, an apparatus for reporting beam failure information is provided, including:
a detecting unit configured to detect that a beam failure occurs in a link with a transmission reception point or beam failure recovery of the transmission reception point is triggered; and
a transmitting unit configured to report a MAC CE to a network device according to configuration of carrier aggregation (CA) and/or uplink resources, wherein the MAC CE indicates information of the transmission reception point where beam failure is detected or for which beam failure recovery is triggered, or indicates to a network device information that a beam failure is detected or beam failure recovery is triggered via another transmission reception point of a cell to which the transmission reception point belongs.

One of advantageous effects of the embodiments of the present disclosure is: a terminal equipment generates a MAC CE, wherein the MAC CE indicates information of a TRP where beam failure is detected or for which beam failure recovery is triggered, or the terminal equipment indicates to a network device information that a beam failure is detected or beam failure recovery is triggered via another TRP of a cell to which the TRP where beam failure is detected or for which beam failure recovery is triggered belongs. Hence, the terminal equipment may explicitly or implicitly indicate information of the TRP to the network device, and the network device may take a step dealing with TRP-level beam failure, so as to avoid wasting resources.

Referring to the later description and figures, specific implementations of the present disclosure are disclosed in detail, indicating a manner that the principle of the present disclosure may be adopted. It should be understood that the implementations of the present disclosure are not limited in terms of the scope. Within the scope of the spirit and terms of the appended claims, the implementations of the present disclosure include many changes, modifications and equivalents.

Features that are described and/or shown with respect to one implementation may be used in the same way or in a similar way in one or more other implementations, may be combined with or replace features in the other implementations.

It should be emphasized that the term "comprise/include" when being used herein refers to the presence of a feature, a whole piece, a step or a component, but does not exclude the presence or addition of one or more other features, whole pieces, steps or components.

### Brief Description of the Drawings

Elements and features described in one drawing or embodiment of the invention may be combined with an element and a feature shown in one or more other figures or implementations. In addition, in the drawings, like reference numerals designate corresponding parts throughout the several views and may be used to designate like or similar parts in more than one embodiment.
FIG. 1 is a schematic diagram of a communication system in an embodiment of the present disclosure;
FIG. 2 is a schematic diagram of a BFR MAC CE or a Truncated BFR MAC CE with a first format;
FIG. 3 is a schematic diagram of a BFR MAC CE or a Truncated BFR MAC CE with a second format;
FIG. 4 is a schematic diagram of a multi-TRP scenario in an embodiment of the present disclosure;
FIG. 5 is a schematic diagram of a method for generating beam failure information in an embodiment of the present disclosure;
FIG. 6 is a schematic diagram of beam failure detection (BFD) or beam failure recovery (BFR) in an embodiment of the present disclosure;
FIG. 7 is a schematic diagram of a MAC CE in an embodiment of the present disclosure;
FIG. 8 is another schematic diagram of a MAC CE in an embodiment of the present disclosure;
FIG. 9 is another schematic diagram of a MAC CE in an embodiment of the present disclosure;
FIG. 10 is another schematic diagram of a MAC CE in an embodiment of the present disclosure;
FIG. 11 is a schematic diagram of a TRP-specific BFR MAC CE in an embodiment of the present disclosure;
FIG. 12 is another schematic diagram of a TRP-specific BFR MAC CE in an embodiment of the present disclosure;
FIG. 13 is another schematic diagram of a TRP-specific BFR MAC CE in an embodiment of the present disclosure;
FIG. 14 is another schematic diagram of a TRP-specific BFR MAC CE in an embodiment of the present disclosure;
FIG. 15 is another schematic diagram of a TRP-specific BFR MAC CE in an embodiment of the present disclosure;
FIG. 16 is a schematic diagram of a method for reporting beam failure information in an embodiment of the present disclosure;
FIG. 17 is another schematic diagram of a TRP-specific BFR MAC CE in an embodiment of the present disclosure;
FIG. 18 is another schematic diagram of a TRP-specific BFR MAC CE in an embodiment of the present disclosure;
FIG. 19 is another schematic diagram of a TRP-specific BFR MAC CE in an embodiment of the present disclosure;
FIG. 20 is a schematic diagram of beam selection in an embodiment of the present disclosure;
FIG. 21 is a schematic diagram of an apparatus for generating beam failure information in an embodiment of the present disclosure;
FIG. 22 is a schematic diagram of an apparatus for reporting beam failure information in an embodiment of the present disclosure;
FIG. 23 is a schematic diagram of a network device in an embodiment of the present disclosure;
FIG. 24 is a schematic diagram of a terminal equipment in an embodiment of the present disclosure.

### Detailed Description

Referring to the figures, through the following Description, the above and other features of the present disclosure will become obvious. The Description and figures specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that connects a terminal equipment in a communication system to a communication network and provides services to the terminal equipment. The network device may include but be not limited to the following devices: Base Station (BS), Access Point (AP), Transmission Reception Point (TRP), a broadcast transmitter, Mobile Management Entity (MME), a gateway, a server, Radio Network Controller (RNC), Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.), Integrated Access and Backhaul (IAB) node or IAB-DU or IAB-donor. And the term "BS" may include their some or all functions, each BS may provide communication coverage to a specific geographic region. The term "a cell" may refer to a BS and/or its coverage area, which depends on the context in which this term is used. Where there is no confusion, the terms "cell" and "BS" are interchangeable.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT), IAB-MT, a station and so on.

The terminal equipment may include but be not limited to the following devices: Cellular Phone, Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipment as described above. If it is not specifically mentioned herein, "a device" may refer to a network device, or may refer to a terminal equipment.

The scenarios of the embodiments of the present disclosure are described through the following examples, however the present disclosure is not limited to these.

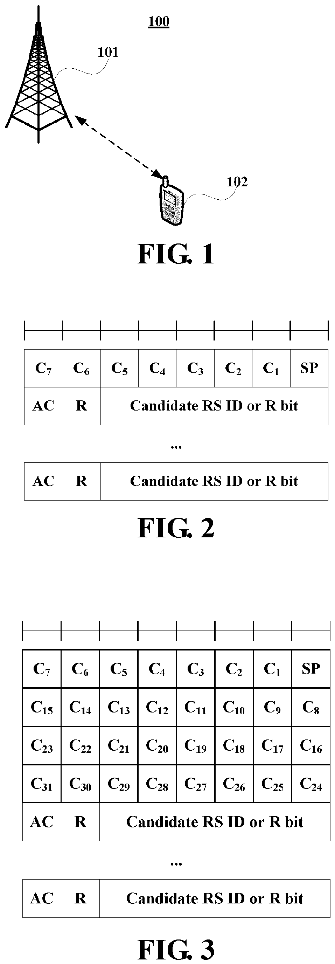

FIG. 1 is a schematic diagram of a communication system in the embodiments of the present disclosure, schematically describes situations by taking a terminal equipment and a network device as examples, as shown in FIG. 1, a communication system 100 may include a network device 101 and a terminal equipment 102. For simplicity, FIG. 1 only takes one terminal equipment and one network device as examples for description, however the embodiments of the present disclosure are not limited to these, for example there may be a plurality of terminal equipments.

In the embodiments of the present disclosure, transmission of existing or further implementable services may be carried out between the network device 101 and the terminal equipment 102. For example, these services may include but be not limited to: enhanced Mobile Broadband (eMBB), massive Machine Type Communication (mMTC), Ultra-Reliable and Low-Latency Communication (URLLC) and so on.

In the beam failure recovery procedure, beam failure information of a secondary cell may be carried by a BFR MAC CE or a Truncated BFR MAC CE, and is transmitted by the terminal equipment to the network device.

FIG. 2 is a schematic diagram of an BFR MAC CE or a Truncated BFR MAC CE with a first format (referred to as Format 1). FIG. 3 is a schematic diagram of an BFR MAC CE or a Truncated BFR MAC CE with a second format (referred to as Format 2).

Specifically, for example, for the BFR MAC CE, if a highest serving cell index *ServCellIndex* of the MAC entity's secondary cell for which a beam failure is detected and evaluation of candidate beams according to the requirements has been completed is less than 8, Format 1 in FIG. 2 is used; otherwise Format 2 in FIG. 3 is used.

For the Truncated BFR MAC CE, if a highest serving cell index *ServCellIndex* of the MAC entity's secondary cell for which a beam failure is detected and evaluation of candidate beams according to the requirements has been completed is less than 8, or a beam failure is detected in a special cell and the special cell is included in a Truncated BFR MAC CE and a UL-SCH resource cannot accommodate the Truncated BFR MAC CE with Format 2 in FIG. 3 plus its subheader as a result of LCP, Format 1 in FIG. 2 is used; otherwise Format 2 in FIG. 3 is used.

For example, fields for Format 1 and Format 2 are defined as follows:
For the BFR MAC CE, a Ci field indicates beam failure detection of a secondary cell with *ServCellIndex* i, whether evaluation of candidate beams according to the requirements has been completed and the presence of an octet containing an AC field, the AC field indicates the presence of a Candidate RS ID field in this octet, the Candidate RS ID field is set to be an index of SSB or CSI-RS.

The Ci field set to 1 indicates that beam failure is detected, evaluation of candidate beams according to the requirements has been completed and a octet containing the AC field is present for the secondary cell with *ServCellIndex* i. The Ci field set to 0 indicates that beam failure is not detected, or beam failure is detected but evaluation of candidate beams according to the requirements has not been completed and the octet containing the AC field is not present for the secondary cell with *ServCellIndex* i. If present, the octets containing the AC field are present in ascending order based on the *ServCellIndex.*

For the Truncated BFR MAC CE, a Ci field indicates beam failure detection of a secondary cell with *ServCellIndex* i, whether evaluation of candidate beams is completed according to the requirements and the presence of an octet containing an AC field, the AC field indicates the presence of a Candidate RS ID field in this octet, the Candidate RS ID field is set to be an index of SSB or CSI-RS.

The Ci field set to 1 indicates that beam failure is detected, the evaluation of candidate beams according to the requirements has been completed, and the octet containing the AC field for the secondary cell with *ServCellIndex* i may be present. The Ci field set to 0 indicates that beam failure is not detected, or beam failure is detected but evaluation of candidate beams according to the requirements has not been completed, and the octet containing the AC field is not present for the secondary cell with *ServCellIndex* i. If present, the octets containing the AC field are present in ascending order based on the *ServCellIndex.*The number of octetss containing the AC field may be 0, while not exceeding an available grant size.

The (Truncated) BFR MAC CE is schematically describes above, and the relevant scenarios of the embodiments of the present disclosure are described below. In the embodiments of the present disclosure, a beam may be replaced with a reference signal (RS), for example, may be represented by SSB or CSI-RS.

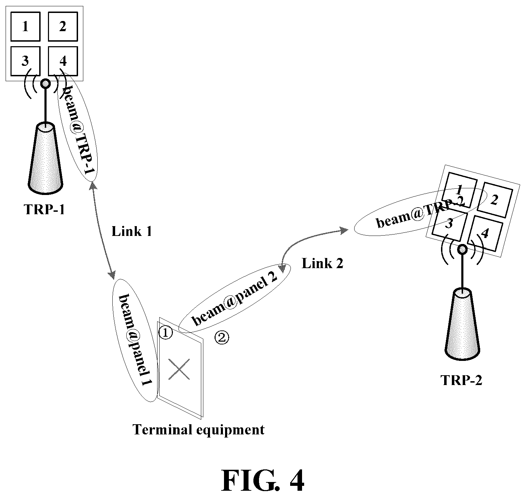

FIG. 4 is a schematic diagram of a multi-TRP scenario in an embodiment of the present disclosure. A TRP may be a part of a network device (for example, a gNB) that receives signals from a terminal equipment, and may also be a part of a network device (for example, a gNB) that transmits signals to a terminal equipment. Moreover, the TRP may also represent a set of Downlink Control Information (DCI) or a set of reference signals, and so on.

As shown in FIG. 4, in a scenario of a multi-TRP operation, a terminal equipment may have a panel 1 (pannel-1) and a panel 2 (pannel-2); one serving cell may schedule the terminal equipment from 2 TRPs, to provide better Physical Downlink Share Channel (PDSCH) coverage, reliability and/or data rate.

For the multi-TRP operation, there may be two different operation modes: single-DCI and multi-DCI. For these two modes, control of uplink and downlink operations is performed by a physical layer and a medium access control (MAC). In a single-DCI mode, a terminal equipment is scheduled by two TRPs via the same DCI; and in a multi-DCI mode, a terminal equipment is scheduled by a separate DCI of each TRP.

In the multi-TRP operation, according to the Rel-15/16 beam failure detection and beam failure recovery mechanism, when a beam between a single TRP and a terminal equipment is blocked while a beam between another TRP and the terminal equipment operates, a physical layer does not indicate a beam failure instance to a MAC layer and does not trigger a beam failure detection procedure for a MAC. In order to solve this problem, a TRP-specific BFRQ architecture based on Rel-16 secondary cell Beam Failure Recovery reQuest (BFRQ) is introduced, in this way, when a beam between any TRP and a terminal equipment is blocked, the terminal equipment may report beam failure information to a network device.

However, based on the Rel-16 secondary cell Beam Failure Recovery reQuest (BFRQ), information provided by the terminal equipment to the network device includes whether beam failure occurs in a secondary cell, and candidate beam information when the failure occurs. Based on the information, the network device may not determine which TRP fails thus the same step as that of dealing with cell beam failure may be taken, resulting in a waste of resources.

For the above problem, the embodiments of the present disclosure are further described below. The embodiments of the present disclosure are described from a MAC layer of the terminal equipment and implemented by the MAC entity. The MAC entity includes a beam failure detection procedure, a beam failure recovery procedure and a multiplexing and assembly entity (hereinafter also referred to as a multiplexing and assembly procedure), etc. The lower layer in the embodiments of the present disclosure is, for example, a physical layer, an antenna unit, a measurement procedure, etc. For specific concepts and definitions of each layer and each entity, please refer to relevant technologies, which are not repeated in the embodiments of the present disclosure.

In the embodiments of the present disclosure, cell-specific may be understood as cell-level or all beams, TRP-specific may be understood as TRP-level or a part of beams. Cell-specific MAC CE may be a BFR MAC CE or a truncated BFR MAC CE, etc. of Rel-16. The expression "beam failure is detected" may be interchanged with "beam failure recovery is triggered" or "beam failure indication is triggered".

### Embodiments of a first aspect

The embodiments of the present disclosure provide a method for generating beam failure information, which is described from a terminal equipment.

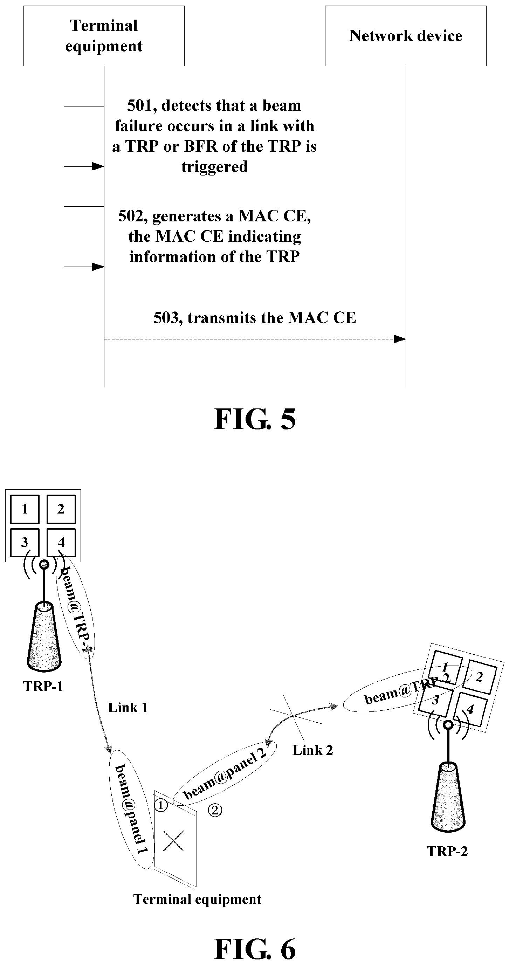

FIG. 5 is a schematic diagram of a method for generating beam failure information in an embodiment of the present disclosure, as shown in FIG. 5, the method includes:
501, a terminal equipment detects that a beam failure occurs in a link with a transmission reception point (TRP) or beam failure recovery of the transmission reception point is triggered; and
502, the terminal equipment generates a medium access control (MAC) control element (CE), wherein the MAC CE indicates information of the transmission reception point in which beam failure is detected or for which beam failure recovery is triggered.

It should be noted that the above FIG. 5 is only schematic description of the embodiments of the present disclosure, but the present disclosure is not limited to this. For example, an execution sequence of each operation may be adjusted appropriately, moreover other some operations may be increased or reduced. Persons skilled in the art may make appropriate modifications according to the above contents, which are not limited to the description in the above FIG. 5.

FIG. 6 is a schematic diagram of beam failure detection (BFD) or beam failure recovery (BFR) in an embodiment of the present disclosure. As shown in FIG. 6, a network device provide service to a terminal equipment via TRP-1 and TRP-2. A link 1 (link-1) between the TRP-1 and the terminal equipment operates normally, but a link 2 (link-2) between the TRP-2 and the terminal equipment is blocked.

In the embodiments of the present disclosure, a terminal equipment may generate information of a transmission reception point (such as TRP-2) in which beam failure is detected or for which beam failure recovery is triggered; and may report the information of the TRP-2 to a network device. Hence, the terminal equipment may explicitly indicate the information of the TRP to the network device, and the network device may take a step dealing with TRP-level beam failure, so as to avoid wasting resources.

In some embodiments, the information of the transmission reception point includes: an index or an identifier of the transmission reception point in which beam failure is detected or for which beam failure recovery is triggered.

For example, the index or the identifier of the transmission reception point may include: an index of a control resource pool corresponding to the transmission reception point, an index or an identifier of the transmission reception point, an index of a beam failure detection reference signal set (BFD-RS set) corresponding to the transmission reception point, and so on, the present disclosure is not limited to these.

In some embodiments, the MAC CE may be a TRP-specific MAC CE, for example may be different from a Rel-16 BFR MAC CE or a Rel-16 Truncated BFR MAC CE; may also be a cell-specific MAC CE, for example reuse a Rel-16 BFR MAC CE or a Rel-16 Truncated BFR MAC CE. Information of the TRP may be indicated in the MAC CE by using 1 bit or a plurality of bits (such as 2 bits).

In some embodiments, a value of 1 bit in the MAC CE indicates that a beam failure is detected in a transmission reception point to which a control resource pool with an index of 0 corresponds or beam failure recovery is triggered for the transmission reception point to which a control resource pool with an index of 0 corresponds, and another value of the 1 bit indicates that a beam failure is detected in a transmission reception point to which a control resource pool with an index of 1 corresponds or beam failure recovery is triggered for the transmission reception point to which a control resource pool with an index of 1 corresponds.

For example, 0 indicates that a beam failure is detected in a transmission reception point to which a control resource pool with an index of 0 corresponds or beam failure recovery is triggered for the transmission reception point to which a control resource pool with an index of 0 corresponds, and 1 indicates that a beam failure is detected in a transmission reception point to which a control resource pool with an index of 1 corresponds or beam failure recovery is triggered for the transmission reception point to which a control resource pool with an index of 1 corresponds.

In some embodiments, a value of 1 bit in the MAC CE indicates that a beam failure is detected in a transmission reception point with an index of 0 or beam failure recovery is triggered for the transmission reception point with an index of 0, and another value of the 1 bit indicates that a beam failure is detected in a transmission reception point with an index of 1 or beam failure recovery is triggered for the transmission reception point with an index of 1.

For example, 0 indicates that a beam failure is detected in a transmission reception point with an index of 0 or beam failure recovery is triggered for the transmission reception point with an index of 0, and 1 indicates that a beam failure is detected in a transmission reception point with an index of 1 or beam failure recovery is triggered for the transmission reception point with an index of 1.

In some embodiments, a value of the 1 bit in the MAC CE indicates that a beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or indicates that a beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds.

Another value of the 1 bit indicates that a beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or indicates that a beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds.

For example, 0 indicates that a beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or indicates that a beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds;
1 indicates that a beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or indicates that a beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds.

In some embodiments, the MAC CE uses the same format as that of a beam failure recovery (BFR) MAC CE or that of a truncated beam failure recovery (truncated BFR) MAC CE. R bit(s) in the beam failure recovery (BFR) MAC CE or the truncated beam failure recovery (truncated BFR) MAC CE is(are) used to carry/indicate/represent an index of the transmission reception point in which beam failure is detected or for which beam failure recovery is triggered.

For example, the format of Rel-16 BFR MAC CE as shown in FIG. 2 or FIG. 3 may be reused, and R bit of the Rel-16 BFR MAC CE may be used to indicate the information of the TRP.

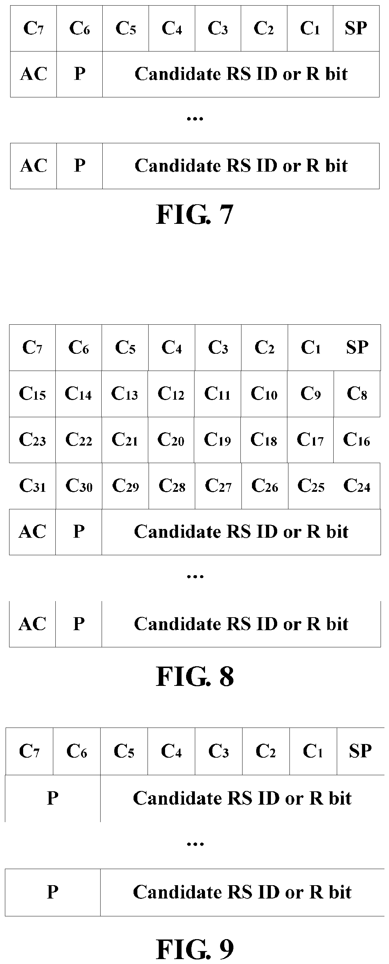

FIG. 7 is a schematic diagram of a MAC CE in an embodiment of the present disclosure, FIG. 8 is another schematic diagram of a MAC CE in an embodiment of the present disclosure. For example, being different from Rel-16 BFR MAC CEs, a P bit (i.e., the R bit in Rel-16 BFR MAC CEs) may be used. Determination of a length (1 byte or 4 bytes) of a bitmap may be identical with that in an Rel-16 BFR MAC CE. The P bit is used to indicate information of a TRP with 1 bit in which beam failure is detected or for which beam failure recovery is triggered, the R bit in original Rel-16 BFR MAC CEs is no longer retained.

For example, the field in FIG. 7 or FIG. 8 may be defined as follows:
For the BFR MAC CE, a Ci field indicates TRP-specific beam failure detection, whether evaluation of candidate beams according to the requirements has been completed and the presence of an octet containing an AC field for a secondary cell with *ServCellIndex* i, the AC field indicates the presence of a Candidate RS ID field in this octet, the Candidate RS ID field is set to be an index of SSB or CSI-RS.

The Ci field set to 1 indicates that TRP-specific beam failure is detected, evaluation of its candidate beams according to the requirements has been completed and an octet containing the AC field is present for the secondary cell with *ServCellIndex* i. The Ci field set to 0 indicates that TRP-specific beam failure is not detected, or beam failure is detected but evaluation of candidate beams according to the requirements has not been completed and an octet containing the AC field is not present for the secondary cell with *ServCellIndex* i. If present, the octets containing the AC field are present in ascending order based on the *ServCellIndex.*

The P bit is used to indicate information of a TRP with 1 bit in which beam failure is detected or for which beam failure recovery is triggered.

For the Truncated BFR MAC CE, a Ci field indicates TRP-specific beam failure detection, whether evaluation of candidate beams according to the requirements is completed and the presence of an octet containing an AC field for a secondary cell with *ServCellIndex* i, the AC field indicates the presence of is a Candidate RS ID field in this octet, the Candidate RS ID field is set to be an index of SSB or CSI-RS.

The Ci field set to 1 indicates that TRP-specific beam failure is detected, evaluation of candidate beams according to the requirements has been completed and an octet that includes the AC field may be present for the secondary cell with *ServCellIndex* i. The Ci field set to 0 indicates that TRP-specific beam failure is not detected, or TRP-specific beam failure is detected but evaluation of candidate beams according to the requirements has not been completed and an octet that includes the AC field is not present for the secondary cell with *ServCellIndex* i. If present, the octets containing the AC field present in ascending order based on the *ServCellIndex.* The number of octets containing the AC field may be 0, while not exceeding an available grant size.

The P bit is used to indicate information of a TRP with 1 bit in which beam failure is detected or for which beam failure recovery is triggered.

In some embodiments, a value of 2 bits in the MAC CE indicates one or any combination of the following that: beam failure is not detected in transmission reception points or beam failure recovery is not triggered for the transmission reception points; beam failure is detected in the transmission reception point to which the control resource pool with an index of 0 corresponds or beam failure recovery is triggered for the transmission reception point to which the control resource pool with an index of 0 corresponds; beam failure is detected in the transmission reception point to which the control resource pool with an index of 1 corresponds or beam failure recovery is triggered for the transmission reception point to which the control resource pool with an index of 1 corresponds; and beam failure is detected both in the transmission reception point to which the control resource pool with an index of 0 corresponds and the transmission reception point to which the control resource pool with an index of 1 corresponds or beam failure recovery is triggered both for the transmission reception point to which the control resource pool with an index of 0 corresponds and the transmission reception point to which the control resource pool with an index of 1 corresponds.

For example, 00 indicates that beam failure is not detected in transmission reception points or beam failure recovery is not triggered for transmission reception points; 01 indicates that beam failure is detected in the transmission reception point to which the control resource pool with an index of 0 corresponds or beam failure recovery is triggered for the transmission reception point to which the control resource pool with an index of 0 corresponds; 10 indicates that beam failure is detected in the transmission reception point to which the control resource pool with an index of 1 corresponds or beam failure recovery is triggered for the transmission reception point to which the control resource pool with an index of 1 corresponds; and 11 indicates that beam failure is detected both in the transmission reception point to which the control resource pool with an index of 0 corresponds and the transmission reception point to which the control resource pool with an index of 1 corresponds or beam failure recovery is triggered both for the transmission reception point to which the control resource pool with an index of 0 corresponds and the transmission reception point to which the control resource pool with an index of 1 corresponds.

In some embodiments, a value of 2 bits in the MAC CE indicates one or any combination of the following that: beam failure is not detected in transmission reception points or beam failure recovery is not triggered for the transmission reception points; beam failure is detected in the transmission reception point with an index of 0 or beam failure recovery is triggered for the transmission reception point with an index of 0; beam failure is detected in the transmission reception point with an index of 1 or beam failure recovery is triggered for the transmission reception point with an index of 1; beam failure is detected both in the transmission reception point with an index of 0 and the transmission reception point with an index of 1 or beam failure recovery is triggered both for the transmission reception point with an index of 0 and the transmission reception point with an index of 1.

For example, 00 indicates that beam failure is not detected in transmission reception points or beam failure recovery is not triggered for the transmission reception points; 01 indicates that beam failure is detected in the transmission reception point with an index of 0 or beam failure recovery is triggered for the transmission reception point with an index of 0; 10 indicates that beam failure is detected in the transmission reception point with an index of 1 or beam failure recovery is triggered for the transmission reception point with an index of 1; 11 indicates that beam failure is detected both in the transmission reception point with an index of 0 and the transmission reception point with an index of 1 or beam failure recovery is triggered both for the transmission reception point with an index of 0 and the transmission reception point with an index of 1.

In some embodiments, a value of 2 bits in the MAC CE indicates one or any combination of the following that:
beam failure is not detected in transmission reception points or beam failure recovery is not triggered for the transmission reception points;
a beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or a beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds;
a beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or a beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds;
a beam failure is detected in both the transmission reception point to which the beam failure detection reference signal set (BFD-RS set) with an index of 0 corresponds and the transmission reception point to which the beam failure detection reference signal set (BFD-RS set) with an index of 1 corresponds or beam failure recovery is triggered for both the transmission reception point to which the beam failure detection reference signal set (BFD-RS set) with an index of 0 corresponds and the transmission reception point to which the beam failure detection reference signal set (BFD-RS set) with an index of 1 corresponds, or a beam failure is detected in all beams to which the beam failure detection reference signal set (BFD-RS set) with an index of 0 corresponds and all beams to which the beam failure detection reference signal set (BFD-RS set) with an index of 1 corresponds or beam failure recovery is triggered for all beams to which the beam failure detection reference signal set (BFD-RS set) with an index of 0 corresponds and all beams to which the beam failure detection reference signal set (BFD-RS set) with an index of 1 corresponds.

For example, 00 indicates that beam failure is not detected in transmission reception points or beam failure recovery is not triggered for the transmission reception points;
01 indicates that a beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or indicates that a beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds;
10 indicates that a beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or indicates that a beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds;
11 indicates that a beam failure is detected in both the transmission reception point to which the beam failure detection reference signal set (BFD-RS set) with an index of 0 corresponds and the transmission reception point to which the beam failure detection reference signal set (BFD-RS set) with an index of 1 corresponds or beam failure recovery is triggered for both the transmission reception point to which the beam failure detection reference signal set (BFD-RS set) with an index of 0 corresponds and the transmission reception point to which the beam failure detection reference signal set (BFD-RS set) with an index of 1 corresponds, or indicates that a beam failure is detected in all beams to which the beam failure detection reference signal set (BFD-RS set) with an index of 0 corresponds and all beams to which the beam failure detection reference signal set (BFD-RS set) with an index of 1 corresponds or beam failure recovery is triggered for all beams to which the beam failure detection reference signal set (BFD-RS set) with an index of 0 corresponds and all beams to which the beam failure detection reference signal set (BFD-RS set) with an index of 1 corresponds.

In some embodiments, the MAC CE uses the same format as that of a beam failure recovery (BFR) MAC CE or that of a truncated beam failure recovery (truncated BFR) MAC CE. R bit(s) and AC field(s) in a beam failure recovery MAC CE or truncated beam failure recovery MAC CE are used to carry/indicate/represent an index of the transmission reception point in which beam failure is detected or for which beam failure recovery is triggered.

For example, the format of Rel-16 BFR MAC CE as shown in FIG. 2 or FIG. 3 may be reused, and R bit and AC field of the Rel-16 BFR MAC CE may be used to indicate the information of the TRP.

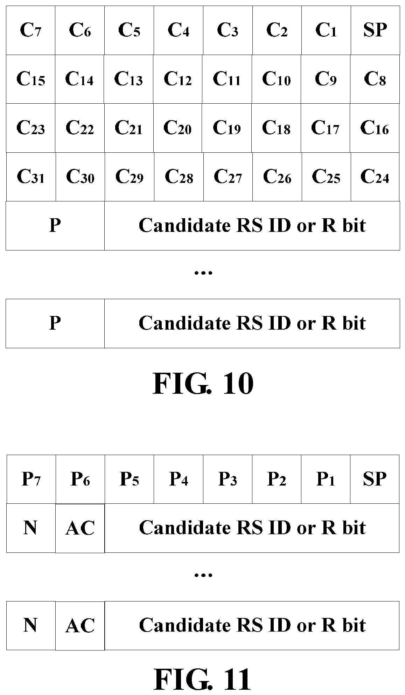

FIG. 9 is another schematic diagram of a MAC CE in an embodiment of the present disclosure, FIG. 10 is another schematic diagram of a MAC CE in an embodiment of the present disclosure. For example, being different from Rel-16 BFR MAC CEs, a P bit (i.e., an AC field + an R bit in Rel-16 BFR MAC CEs) may be used. Determination of a length (1 byte or 4 bytes) of a bitmap may be identical with that in a Rel-16 BFR MAC CE. The P bit is used to indicate information of a TRP with 2 bits in which beam failure is detected or for which beam failure recovery is triggered, the R bit in original Rel-16 BFR MAC CEs is no longer retained. In this case, in order to distinguish the R-bit from a candidate RS ID, the candidate RS ID shall start at 1 and not contain an all-zero value.

For example, the field in FIG. 9 or FIG. 10 may be defined as follows:
For the BFR MAC CE, a Ci field indicates TRP-specific beam failure detection, whether evaluation of candidate beams according to the requirements has been completed and the presence of an octet containing a P field for a secondary cell with *ServCellIndex* i, the P field indicates the presence of a Candidate RS ID field in this octet, the Candidate RS ID field is set to be an index of SSB or CSI-RS.

The Ci field set to 1 indicates that TRP-specific beam failure is detected, evaluation of candidate beams according to the requirements has completed and a octet containing the P field is present for the secondary cell with *ServCellIndex* i. The Ci field set to 0 indicates that TRP-specific beam failure is not detected, or TRP-specific beam failure is detected but evaluation of candidate beams according to the requirements has not been completed and an octet containing the P field is not present for the secondary cell with *ServCellIndex* i. If present, the octets containing the P field are present in ascending order based on the *ServCellIndex.*

The P bit is used to indicate information of a TRP with 2 bits in which beam failure is detected or for which beam failure recovery is triggered.

For the Truncated BFR MAC CE, a Ci field indicates TRP-specific beam failure detection, whether evaluation of candidate beams according to the requirements has been completed and the presence of an octet containing a P field for a secondary cell with *ServCellIndex* i, the P field indicates the presence of a Candidate RS ID field in this octet, the Candidate RS ID field is set to be an index of SSB or CSI-RS.

The Ci field set to 1 indicates that TRP-specific beam failure is detected, evaluation of candidate beams according to the requirements has been completed and an octet containing the P field may be present for the secondary cell with *ServCellIndex* i. The Ci field set to 0 indicates that TRP-specific beam failure is not detected, or TRP-specific beam failure is detected but evaluation of candidate beams according to the requirements has not been completed and an octet containing the P field is not present for the secondary cell with *ServCellIndex* i. If present, the octets containing the P field present in ascending order based on the *ServCellIndex.* The number of octets containing the P field may be 0, while not exceeding an available grant size.

The P bit is used to indicate information of a TRP with 2 bits in which beam failure is detected or for which beam failure recovery is triggered.

In some embodiments, the MAC CE may further include: a type in which beam failure is detected or a type in which beam failure recovery is triggered. For example, the MAC CE may be a TRP-specific MAC CE, or may multiplex cell-specific MAC CE, and a type of BFD or BFR may be indicated using 1 bit or more bits (such as 2 bits) in the MAC CE.

In some embodiments, a value of the 1 bit in the MAC CE indicates that cell-specific beam failures or beam failures of all beams are detected or cell-specific beam failure recovery or beam failure recovery of all beams is triggered, and another value of the 1 bit indicates that transmission reception point (TRP)-specific beam failures or beam failures of a part of beams are detected or TRP-specific beam failure recovery or beam failure recovery of a part of beams is triggered.

For example, 0 indicates that cell-specific beam failures or beam failures of all beams are detected or cell-specific beam failure recovery or beam failure recovery of all beams is triggered, and 1 indicates that transmission reception point (TRP)-specific beam failures or beam failures of a part of beams are detected or TRP-specific beam failure recovery or beam failure recovery of a part of beams is triggered.

In some embodiments, a value of the 1 bit in the MAC CE indicates that cell-specific beam failures or beam failures of all beams are detected or cell-specific beam failure recovery or beam failure recovery of all beams is triggered, and another value of the 1 bit indicates that non-cell-specific beam failures or beam failures of not all beams are detected or non-cell-specific beam failure recovery or beam failure recovery of not all beam is triggered.

For example, 0 indicates that cell-specific beam failures or beam failures of all beams are detected or cell-specific beam failure recovery or beam failure recovery of all beams is triggered, and 1 indicates that non-cell-specific beam failures or beam failures of not all beams are detected or non-cell-specific beam failure recovery or beam failure recovery of not all beam is triggered.

In some embodiments, a value of the 1 bit in the MAC CE indicates that TRP-specific beam failures or beam failures of a part of beams are detected or TRP-specific beam failure recovery or beam failure recovery of a part of beams is triggered, and another value of the 1 bit indicates that non-TRP-specific beam failures or beam failures of not a part of beams are detected or non-TRP-specific beam failure recovery or beam failure recovery of not a part of beams is triggered.

For example, 0 indicates that TRP-specific beam failures or beam failures of a part of beams are detected or TRP-specific beam failure recovery or beam failure recovery of a part of beams is triggered, and 1 indicates that non-TRP-specific beam failures or beam failures of not a part of beams are detected or non-TRP-specific beam failure recovery or beam failure recovery of not a part of beams is triggered.

In some embodiments, R bit(s) in the beam failure recovery MAC CE or the truncated beam failure recovery (truncated BFR) MAC CE is(are) used to carry/indicate/represent a type in which beam failure is detected or a type for which beam failure recovery is triggered.

For example, the format of the Rel-16 BFR MAC CE as shown in FIG. 2 or FIG. 3 may be reused, and the R bit of the Rel-16 BFR MAC CE may be used to indicate a type of the BFD or BFR.

In some embodiments, a value of 2 bits in the MAC CE indicates one or any combination of the following that:
cell-specific beam failures or beam failures of all beams are not detected or cell-specific beam failure recovery or beam failure recovery of all beams is not triggered, and TRP-specific beam failures or beam failures of a part of beams are not detected or TRP-specific beam failure recovery or beam failure recovery of a part of beams is not triggered;
cell-specific beam failures or beam failures of all beams are detected or cell-specific beam failure recovery or beam failure recovery of all beams is triggered;
TRP-specific beam failures or beam failures of a part of beams are detected or TRP-specific beam failure recovery or beam failure recovery of a part of beams is triggered;
cell-specific beam failures or beam failures of all beams are detected or cell-specific beam failure recovery or beam failure recovery of all beams is triggered, and TRP-specific beam failures or beam failures of a part of beams are detected or TRP-specific beam failure recovery or beam failure recovery of a part of beams is triggered.

For example, 00 indicates that cell-specific beam failures or beam failures of all beams are not detected or cell-specific beam failure recovery or beam failure recovery of all beams is not triggered, and TRP-specific beam failures or beam failures of a part of beams are not detected or TRP-specific beam failure recovery or beam failure recovery of a part of beams is not triggered; 01 indicates that cell-specific beam failures or beam failures of all beams are detected or cell-specific beam failure recovery or beam failure recovery of all beams is triggered; 10 indicates that TRP-specific beam failures or beam failures of a part of beams are detected or TRP-specific beam failure recovery or beam failure recovery of a part of beams is triggered; and 11 indicates that cell-specific beam failures or beam failures of all beams are detected or cell-specific beam failure recovery or beam failure recovery of all beams is triggered, and TRP-specific beam failures or beam failures of a part of beams are detected or TRP-specific beam failure recovery or beam failure recovery of a part of beams is triggered.

In some embodiments, a value of 2 bits in the MAC CE indicates one or any combination of the following that:
cell-specific beam failures or beam failures of all beams are not detected or cell-specific beam failure recovery or beam failure recovery of all beams is not triggered, and non-cell-specific beam failures or beam failures of not all beams are not detected or non-cell-specific beam failure recovery or beam failure recovery of not all beam is not triggered;
cell-specific beam failures or beam failures of all beams are detected or cell-specific beam failure recovery or beam failure recovery of all beams is triggered;
non-cell-specific beam failures or beam failures of not all beams are detected or non-cell-specific beam failure recovery or beam failure recovery of not all beams is triggered;
cell-specific beam failures or beam failures of all beams are detected or cell-specific beam failure recovery or beam failure recovery of all beams is triggered, and non-cell-specific beam failures or beam failures of not all beams are detected or non-cell-specific beam failure recovery or beam failure recovery of not all beam is triggered.

For example, 00 indicates that cell-specific beam failures or beam failures of all beams are not detected or cell-specific beam failure recovery or beam failure recovery of all beams is not triggered, and non-cell-specific beam failures or beam failures of not all beams are not detected or non-cell-specific beam failure recovery or beam failure recovery of not all beams is not triggered; 01 indicates that cell-specific beam failures or beam failures of all beams are detected or cell-specific beam failure recovery or beam failure recovery of all beams is triggered; 10 indicates that non-cell-specific beam failures or beam failures of not all beams are detected or non-cell-specific beam failure recovery or beam failure recovery of not all beams is triggered; and 11 indicates that cell-specific beam failures or beam failures of all beams are detected or cell-specific beam failure recovery or beam failure recovery of all beams is triggered, and non-cell-specific beam failures or beam failures of not all beams are detected or non-cell-specific beam failure recovery or beam failure recovery of not all beams is triggered.

In some embodiments, a value of 2 bits in the MAC CE indicates one or any combination of the following that:
non-TRP-specific beam failures or beam failures of not a part of beams are not detected or non-TRP-specific beam failure recovery or beam failure recovery of not a part of beams is not triggered, and TRP-specific beam failures or beam failures of a part of beams are not detected or TRP-specific beam failure recovery or beam failure recovery of a part of beams is not triggered;
non-TRP-specific beam failures or beam failures of not a part of beams are detected or non-TRP-specific beam failure recovery or beam failure recovery of not a part of beams is triggered;
TRP-specific beam failures or beam failures of a part of beams are detected or TRP-specific beam failure recovery or beam failure recovery of a part of beams is triggered;
non-TRP-specific beam failures or beam failures of not a part of beams are detected or non-TRP-specific beam failure recovery or beam failure recovery of not a part of beams is triggered, and TRP-specific beam failures or beam failures of a part of beams are detected or TRP-specific beam failure recovery or beam failure recovery of a part of beams is triggered.

For example, 00 indicates that non-TRP-specific beam failures or beam failures of not a part of beams are not detected or non-TRP-specific beam failure recovery or beam failure recovery of not a part of beams is not triggered, and TRP-specific beam failures or beam failures of a part of beams are not detected or TRP-specific beam failure recovery or beam failure recovery of a part of beams is not triggered; 01 indicates that non-TRP-specific beam failures or beam failures of not a part of beams are detected or non-TRP-specific beam failure recovery or beam failure recovery of not a part of beams is triggered; 10 indicates that TRP-specific beam failures or beam failures of a part of beams are detected or TRP-specific beam failure recovery or beam failure recovery of a part of beams is triggered; and 11 indicates that non-TRP-specific beam failures or beam failures of not a part of beams are detected or non-TRP-specific beam failure recovery or beam failure recovery of not a part of beams is triggered, and TRP-specific beam failures or beam failures of a part of beams are detected or TRP-specific beam failure recovery or beam failure recovery of a part of beams is triggered.

In some embodiments, R bit(s) and AC field(s) in the beam failure recovery MAC CE or the truncated beam failure recovery (truncated BFR) MAC CE are used to carry/indicate/represent a type in which beam failure is detected or a type for which beam failure recovery is triggered.

For example, the format of the Rel-16 BFR MAC CE as shown in FIG. 2 or FIG. 3 may be reused, and R bit and AC field of the Rel-16 BFR MAC CE may be used to indicate a type of a BFD or BFR.

In some embodiments, the MAC CE may further include at least one or any combination of the following information: information of a cell (for example, CA is configured) to which the transmission reception point where a beam failure is detected or beam failure recovery is triggered belongs, whether information of candidate beams is found (for example, a candidate reference signal list is configured), information of candidate beams (for example, a candidate beam list is configured and candidate beams are found).

The contents of the MAC CE is schematically described above, and the transmission of the MAC CE is schematically described below.

As shown in FIG. 5, the method may further include:
503, a terminal equipment transmits a MAC CE to a network device.

In some embodiments, the MAC CE is transmitted to the network device via another transmission reception point of a cell to which the transmission reception point belongs.

In some embodiments, the MAC CE is transmitted to the network device via a transmission reception point which is co-located with the transmission reception point of a cell which is different from a cell to which the transmission reception point belongs. For example, at this case, the terminal equipment is configured with carrier aggregation (CA).

In some embodiments, the MAC CE is reported to the network device via a cell being different from a cell to which the transmission reception point belongs. For example, at this moment, the terminal equipment is configured with carrier aggregation (CA).

In some embodiments, the MAC CE is identified by a MAC subheader with a logic channel identifier (LCID) or with an enhanced logic channel identifier (eLCID). For example, an LCID/eLCID same as that in Rel-16 BFR MAC CEs may be used, or an LCID/eLCID different from that in Rel-16 BFR MAC CEs may be used.

In some embodiments, a terminal equipment transmits the MAC CE using one of the following uplink grants (UL grants):
an uplink grant of a TRP where a TRP-specific beam failure is not detected of a cell to which the TRP where a TRP-specific beam failure is detected belongs;
an uplink grant of the TRP of a cell different from the cell to which the TRP where a TRP-specific beam failure is detected belongs co-located with the TRP where a TRP-specific beam failure is detected;
an uplink grant of the cell different from the cell to which the TRP where a TRP-specific beam failure is detected belongs.

In some embodiments, in a case where there are a plurality of available resources, a terminal equipment may select an uplink grant to transmit the MAC CE based on a predefined or network configuration, or select an uplink grant to transmit the MAC CE based on implementation or randomly select an uplink grant to transmit the MAC CE.

For example, the available resources may be: UL-SCH resources that may be used for a new transmission; or the available resources may also be: UL-SCH resources are available for a new transmission and the UL-SCH resources can accommodate this MAC CE plus its subheader as a result of LCP. Uplink grants are used to indicate UL-SCH resources in the available resources.

Reuse a Rel-16 BFR MAC CE and a Rel-16 Truncated BFR MAC CE (also known as cell-level BFR MAC CEs for convenience below) is used to schematically describe transmission of a MAC CE, generation of a TRP-specific MAC CE is described below.

In some embodiments, a medium access control (MAC) entity of the terminal equipment indicates a multiplexing and assembly procedure to generate a TRP-specific MAC CE; the TRP-specific MAC CE is different from a cell-specific MAC CE. For example, a TRP-specific CE is different from a Rel-16 BFR MAC CE or a Rel-16 Truncated BFR MAC CE.

The cell-specific MAC CE may include: a cell-specific BFR MAC CE (Rel-16 BFR MAC CE), a cell-specific Truncated BFR MAC CE (Rel-16 Truncated BFR MAC CE);

The TRP-specific MAC CE (TRP-specific BFR MAC CE) may include: a TRP-specific/-level BFR MAC CE (Rel-17 BFR MAC CE), a TRP-specific/-level BF MAC CE (Rel-17 BF MAC CE), a TRP-specific/-level Truncated BFR MAC CE (Rel-17 Truncated BFR MAC CE), a TRP-specific/-level Truncated BF MAC CE (Rel-17 Truncated BF MAC CE).

The TRP-specific MAC CE is describe by taking a TRP-specific BFR MAC CE as an example below.

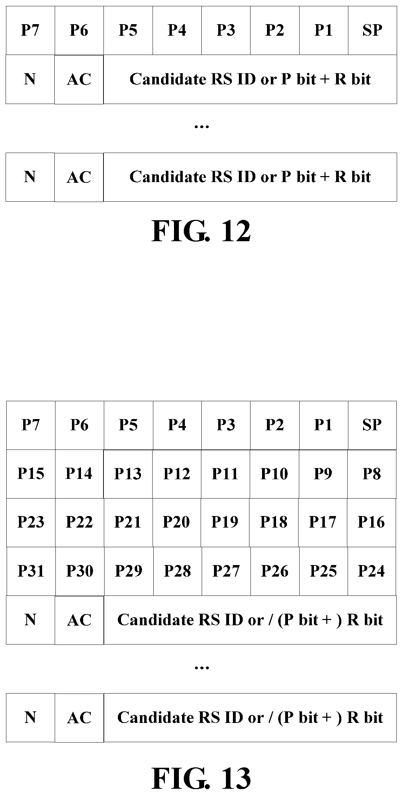

FIG. 11 is a schematic diagram of a TRP-specific BFR MAC CE in an embodiment of the present disclosure; FIG. 12 is another schematic diagram of a TRP-specific BFR MAC CE in an embodiment of the present disclosure; FIG. 13 is another schematic diagram of a TRP-specific BFR MAC CE in an embodiment of the present disclosure. Determination of a length (1 byte or 4 bytes) of a bitmap is identical with that in a Rel-16 BFR MAC CE.

Pi bit is used to indicate whether TRP-specific beam failure is detected in a cell with a cell index (such as *ServCellIndex*) being i and whether there is an additional byte; for example, 1 indicates that an additional byte is detected and present, 0 indicates that an additional byte is not detected and is not present. N indicates the number of bytes corresponding to TRP-specific beam failure in a corresponding cell; for example, 0 indicates 1 byte, 1 indicates 2 bytes.

When the number of bytes corresponding to TRP-specific beam failure is 2, an AC field is used to indicate that the lower 6 bits in the byte is a candidate RS ID or R bit(s); when the number of bytes corresponding to TRP-specific beam failure is 1, the AC field is used to indicate that the lower 6 bits in the byte is a candidate RS ID or one P bit (indicating that TRP information of TRP-specific beam failure is detected) and five R bits.

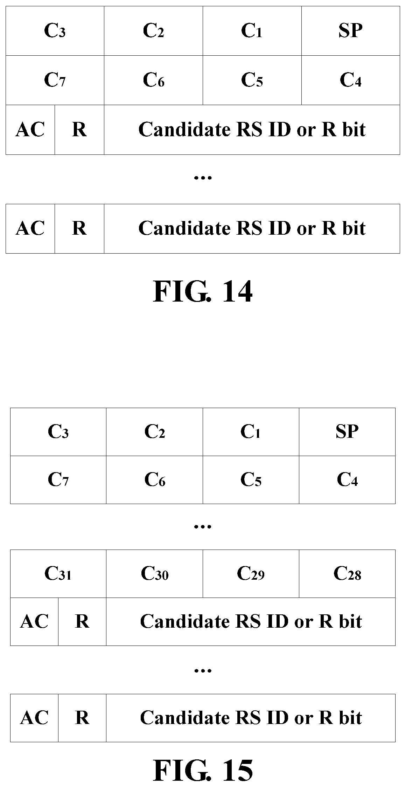

FIG. 14 is another schematic diagram of a TRP-specific BFR MAC CE in an embodiment of the present disclosure; FIG. 15 is another schematic diagram of a TRP-specific BFR MAC CE in an embodiment of the present disclosure. Determination of a length (2 byte or 8 bytes) of a bitmap is identical with that in a Rel-16 BFR MAC CE.

Ci bit is used to indicate TRP information (2-bit TRP information) in a cell with a cell index (such as *ServCellIndex*) is i.

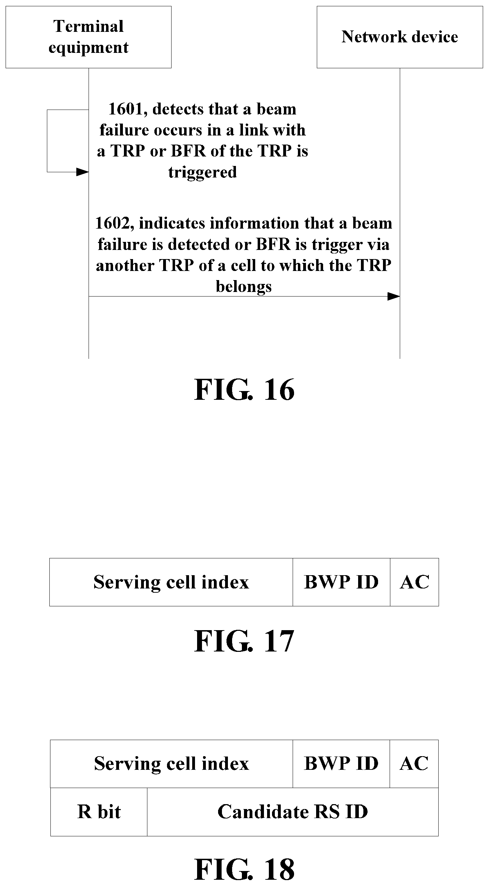

The TRP-specific BFR MAC CE in the embodiments of the present disclosure is schematically described above, the present disclosure is not limited to this, the embodiments of a second aspect may also be referred to. For example, the TRP-specific BFR MAC CE may also be combined with the structures shown in FIGS. 17 to 19 below.

In some embodiments, a TRP-specific MAC CE may be generated using an independent procedure from a procedure of a cell-specific MAC CE. The TRP-specific MAC CE may include: a TRP-specific/-level BFR MAC CE (Rel-17 BFR MAC CE), a TRP-specific/-level BF MAC CE (Rel-17 BF MAC CE), a TRP-specific/-level Truncated BFR MAC CE (Rel-17 Truncated BFR MAC CE), a TRP-specific/-level Truncated BF MAC CE (Rel-17 Truncated BF MAC CE); one or any combination of the above types of MAC CEs may be generated independently.

For example, for one TRP, if a beam failure detection procedure/beam failure recovery procedure detects at least one beam failure (or, triggers at least one beam failure recovery) and the beam failure recovery is not cancelled, a TRP-specific MAC CE is generated using a independent procedure from a procedure of a cell-specific beam failure recovery MAC CE.

For another example, if a beam failure detection procedure/beam failure recovery procedure detects at least one TRP-specific beam failure (or, triggers at least one TRP-specific beam failure recovery) and the TRP-specific beam failure recovery is not cancelled, the TRP-specific MAC CE is generated using an independent procedure from a procedure of a cell-specific beam failure recovery MAC CE.

For example, a truncated TRP-specific beam failure recovery MAC CE is supported; a procedure for generating the TRP-specific beam failure recovery MAC CE includes:
The MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else trigger a scheduling request (SR) for TRP-specific beam failure recovery for each TRP for which the BFR has been triggered, not cancelled.

For another example, a truncated TRP-specific beam failure recovery MAC CE is not supported; a procedure for generating the TRP-specific beam failure recovery MAC CE includes:
The MAC entity shall:
if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
else trigger a scheduling request (SR) for TRP-specific beam failure recovery for each TRP for which the BFR has been triggered , not cancelled.

In some embodiments, a cell-specific MAC CE and a TRP-specific MAC CE may be generated using a procedure. The cell-specific MAC CE may include: a cell-specific BFR MAC CE (Rel-16 BFR MAC CE), a cell-specific Truncated BFR MAC CE (Rel-16 Truncated BFR MAC CE);

The TRP-specific MAC CE may include: a TRP-specific/-level BFR MAC CE (Rel-17 BFR MAC CE), a TRP-specific/-level BF MAC CE (Rel-17 BF MAC CE), a TRP-specific/-level Truncated BFR MAC CE (Rel-17 Truncated BFR MAC CE), a TRP-specific/-level Truncated BF MAC CE (Rel-17 Truncated BF MAC CE);

One or any combination of the above types of MAC CEs may be generated using the procedure.

For example, for one TRP, if a beam failure detection procedure/beam failure recovery procedure detects at least one beam failure (or, triggers at least one beam failure recovery) and the beam failure recovery is not cancelled, and if the beam failure recovery procedure determines that BFR of at least one secondary cell is triggered and is not canceled, a cell-specific MAC CE and a TRP-specific MAC CE are generated using a procedure.

For another example, if a beam failure detection procedure/beam failure recovery procedure detects at least one TRP-specific beam failure (or, triggers at least one TRP-specific beam failure recovery) and the TRP-specific beam failure recovery is not cancelled, and if the beam failure recovery procedure determines that BFR of at least one secondary cell is triggered and is not canceled, a cell-specific MAC CE and a TRP-specific MAC CE are generated using a procedure.

In addition, if a MAC entity instructs that a MAC CE is generated, it may further instruct to generate another MAC CE. A MAC PDU may be allowed to include more than one MAC CE indicating beam failure information; for example, including a cell-specific BFR MAC CE (Rel-16 BFR MAC CE) and a TRP-specific BFR MAC CE; and so on.

In some embodiments, a truncated TRP-specific beam failure recovery MAC CE is supported; the TRP-specific beam failure recovery MAC CE is preferably generated.

For example, a TRP-specific BFR MAC CE and a cell-specific BFR MAC CE may be generated sequentially.

The MAC entity shall:
If uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources canaccommodate a truncated cell-specific beam failure recovery MAC CE plus its subheader as a result of LCP, instruct a multiplexing and assembly entity to generate the truncated cell-specific beam failure recovery MAC CE;
else trigger a scheduling request (SR) for cell-specific beam failure recovery for each cell for which the BFR has been triggered, not cancelled.

In this example, two MAC CEs may be generated: a TRP-specific BFR MAC CE (or a TRP-specific Truncated BFR MAC CE) and a cell-specific BFR MAC CE (or a cell-specific Truncated BFR MAC CE). These two MAC CEs may be included in one MAC PDU.

For another example:
The MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources neither can accommodate the TRP-specific beam failure recovery MAC CE plus its subheader, nor can accommodate a truncated TRP-specific beam failure recovery MAC CE plus its subheader as a result of LCP:
   if the uplink resources can accommodate the cell-specific beam failure recovery MAC CE plus its subheader, instruct a multiplexing and assembly procedure to generate the cell-specific beam failure recovery MAC CE;
   else if uplink resources are available for a new transmission and if the uplink resource can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.

In this example, one MAC CE may be generated: a TRP-specific BFR MAC CE (or a TRP-specific Truncated BFR MAC CE) or a cell-specific BFR MAC CE (or a cell-specific Truncated BFR MAC CE). One MAC PDU includes one MAC CE therein.

For another example, a TRP-specific BFR MAC CE and a cell-specific BFR MAC CE may be generated nestedly:
The MAC entity shall:
if uplink resources are available for a new transmission and if the uplink resourcescan accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
if uplink resources are available for a new transmission and if the uplink resources cannot accommodate the TRP-specific beam failure recovery MAC CE plus its subheader (or the MAC entity does not instruct a multiplexing and assembly procedure to generate the TRP-specific beam failure recovery MAC CE) (but) can accommodate a truncated TRP-specific beam failure recovery MAC CE plus its subheader as a result of LCP, instruct a multiplexing and assembly entity to generate the truncated TRP-specific beam failure recovery MAC CE;
if there is no uplink resources available for a new transmission, or uplink resources are available for a new transmission and if the uplink resources cannot accommodate the TRP-specific beam failure recovery MAC CE plus its subheader (or the MAC entity does not instruct a multiplexing and assembly procedure to generate the TRP-specific beam failure recovery MAC CE) and cannot accommodate a truncated TRP-specific beam failure recovery MAC CE plus its subheader (or the MAC entity does not instruct a multiplexing and assembly procedure to generate the truncated TRP-specific beam failure recovery MAC CE) as a result of LCP, trigger a scheduling request (SR) for TRP-specific beam failure recovery for each TRP for which the BFR has been triggered, not cancelled;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, two MAC CEs may be generated: a TRP-specific BFR MAC CE (or a cell-specific BFR MAC CE) and a TRP-specific Truncated BFR MAC CE (or a cell-specific Truncated BFR MAC CE). These two MAC CEs may be included in one MAC PDU.

For another example:
The MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
if uplink resources are available for a new transmission and if the uplink resources neithercan accommodate the TRP-specific beam failure recovery MAC CE plus its subheader, nor can accommodate a cell-specific beam failure recovery MAC CE plus its subheader as a result of LCP:
if the uplink resources can accommodate a truncated TRP-specific beam failure recovery MAC CE plus its subheader, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, is not cancelled.

In this example, one MAC CE may be generated: a TRP-specific BFR MAC CE (or a cell-specific BFR MAC CE) or a TRP-specific Truncated BFR MAC CE (or a cell-specific Truncated BFR MAC CE). One MAC PDU includes one MAC CE therein.

In some embodiments, a truncated TRP-specific beam failure recovery MAC CE is supported; the cell-specific beam failure recovery MAC CE is preferably generated.
For example, a cell-specific BFR MAC CE and a TRP-specific BFR MAC CE may be generated sequentially:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled.

In this example, two MAC CEs may be generated: a cell-specific BFR MAC CE (or a cell-specific Truncated BFR MAC CE) and a TRP-specific BFR MAC CE (or a TRP-specific Truncated BFR MAC CE). These two MAC CEs may be included in one MAC PDU.

For another example:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources neither can accommodate the cell-specific beam failure recovery MAC CE plus its subheader, nor can accommodate a truncated cell-specific beam failure recovery MAC CE plus its subheader as a result of LCP:
   if the uplink resources can accommodate the TRP-specific beam failure recovery MAC CE plus its subheader, instruct a multiplexing and assembly procedure to generate the TRP-specific beam failure recovery MAC CE;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled.

In this example, one MAC CE may be generated: a cell-specific BFR MAC CE (or a cell-specific Truncated BFR MAC CE) or a TRP-specific BFR MAC CE (or a TRP-specific Truncated BFR MAC CE). One MAC PDU includes one MAC CE therein.

For example, a cell-specific BFR MAC CE and a TRP-specific BFR MAC CE may be generated nestedly:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
if uplink resources are available for a new transmission and if the uplink resources cannot accommodate the cell-specific beam failure recovery MAC CE plus its subheader (or the MAC entity does not instruct a multiplexing and assembly procedure to generate the cell-specific beam failure recovery MAC CE) (but) can accommodate a truncated cell-specific beam failure recovery MAC CE plus its subheader as a result of LCP, instruct a multiplexing and assembly entity to generate the truncated cell-specific beam failure recovery MAC CE;
if there is no uplink resource available for a new transmission, or uplink resources are available for a new transmission and if uplink resources cannot accommodate the cell-specific beam failure recovery MAC CE plus its subheader (or the MAC entity does not instruct a multiplexing and assembly procedure to generate the cell-specific beam failure recovery MAC CE) and cannot accommodate a truncated cell-specific beam failure recovery MAC CE plus its subheader (or the MAC entity does not instruct a multiplexing and assembly procedure to generate the truncated cell-specific beam failure recovery MAC CE) as a result of LCP, trigger a scheduling request (SR) for cell-specific beam failure recovery for each cell for which BFR has been triggered, not cancelled;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled.

In this example, two MAC CEs may be generated: a cell-specific BFR MAC CE (or a TRP-specific BFR MAC CE) and a cell-specific Truncated BFR MAC CE (or a TRP-specific Truncated BFR MAC CE).

For another example:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
if uplink resources are available for a new transmission and if the uplink resources neither can accommodate the cell-specific beam failure recovery MAC CE plus its subheader, nor can accommodate a TRP-specific beam failure recovery MAC CE plus its subheader as a result of LCP:
   if the uplink resources can accommodate a truncated cell-specific beam failure recovery MAC CE plus its subheader, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled.

In this example, one MAC CE may be generated: a cell-specific BFR MAC CE (or a TRP-specific BFR MAC CE) or a cell-specific Truncated BFR MAC CE (or a TRP-specific Truncated BFR MAC CE).

In some embodiments, a truncated TRP-specific beam failure recovery MAC CE is supported; a priority of the TRP-specific beam failure recovery MAC CE is identical with that of the cell-specific beam failure recovery MAC CE.

For example:
The MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instructs a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader and a truncated TRP-specific beam failure recovery MAC CE plus its subheader as a result of LCP, instruct a multiplexing and assembly procedure to generate the truncated cell-specific beam failure recovery MAC CE and the truncated TRP-specific beam failure recovery MAC CE;
else if uplink resources are available for a new transmission and if the uplink resources can accommodate a truncated cell-specific beam failure recovery MAC CE plus its subheader or a truncated TRP-specific beam failure recovery MAC CE plus its subheader as a result of LCP, instruct a multiplexing and assembly procedure to generate the truncated cell-specific beam failure recovery MAC CE or the truncated TRP-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

In some embodiments, a truncated TRP-specific beam failure recovery MAC CE is not supported; the TRP-specific beam failure recovery MAC CE is preferably generated.

For example:
The MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, two MAC CEs may be generated: a TRP-specific BFR MAC CE and a cell-specific BFR MAC CE (or a cell-specific Truncated BFR MAC CE). These two MAC CEs may be included in one MAC PDU.

For another example:
The MAC entity
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
if uplink resources are available for a new transmission and if the uplink resource neither can accommodate the TRP-specific beam failure recovery MAC CE plus its subheader, nor can accommodate a cell-specific beam failure recovery MAC CE plus its subheader as a result of LCP:
   if the uplink resources can accommodate a truncated cell-specific beam failure recovery MAC CE plus its subheader, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.

In this example, one MAC CE may be generated: a TRP-specific BFR MAC CE or a cell-specific BFR MAC CE (or a cell-specific Truncated BFR MAC CE). One MAC PDU includes one MAC CE therein.

In some embodiments, a truncated TRP-specific beam failure recovery MAC CE is not supported; and the cell-specific beam failure recovery MAC CE is preferably generated.

For example, a cell-specific BFR MAC CE and a TRP-specific BFR MAC CE may be generated sequentially:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader the MAC entity, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.

In this example, two MAC CEs may be generated: a cell-specific BFR MAC CE (or a cell-specific Truncated BFR MAC CE) and a TRP-specific BFR MAC CE. These two MAC CEs may be included in one MAC PDU.

For another example:
The MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instructs a multiplexing and assembly entity to generate the truncated cell-specific beam failure recovery MAC CE;
else, trigger a scheduling request (SR) for cell-specific beam failure for each cell for which the BFR has been triggered, not cancelled;
if uplink resources are available for a new transmission and if the uplink resource neither can accommodate the cell-specific beam failure recovery MAC CE plus its subheader, nor can accommodate a truncated cell-specific beam failure recovery MAC CE plus its subheader as a result of LCP:
   if the uplink resources can accommodate the TRP-specific beam failure recovery MAC CE plus its subheader, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled.

In this example, one MAC CE may be generated: a cell-specific BFR MAC CE (or a cell-specific Truncated BFR MAC CE) or a TRP-specific BFR MAC CE. One MAC PDU includes one MAC CE therein.

For another example, a cell-specific BFR MAC CE and a TRP-specific BFR MAC CE may be generated nestedly:
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.
if uplink resources are available for a new transmission and if the uplink resources cannot accommodate the cell-specific beam failure recovery MAC CE plus its subheader (or the MAC entity does not instruct a multiplexing and assembly procedure to generate the cell-specific beam failure recovery MAC CE) (but) can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, two MAC CEs may be generated: a cell-specific BFR MAC CE (or a TRP-specific BFR MAC CE) and a cell-specific Truncated BFR MAC CE.

For another example:
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.
if uplink resources are available for a new transmission and if the uplink resource neither can accommodate the cell-specific beam failure recovery MAC CE plus its subheader, nor can accommodate a TRP-specific beam failure recovery MAC CE plus its subheade as a result of LCPr :
   if the uplink resources can accommodate a truncated cell-specific beam failure recovery MAC CE plus its subheader, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.

In this example, one MAC CE may be generated: a cell-specific BFR MAC CE (or a TRP-specific BFR MAC CE) or a cell-specific Truncated BFR MAC CE. One MAC PDU includes one MAC CE therein.

In some embodiments, a truncated TRP-specific beam failure recovery MAC CE is not supported; a priority of the TRP-specific beam failure recovery MAC CE is identical with that of the cell-specific beam failure recovery MAC CE.

For example:
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

A priority of the TRP-specific MAC CE is described below.

In some embodiments, a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds.

In some embodiments, a priority of a logical channel to which the transmission reception point-specific beam failure recovery MAC CE corresponds is identical to a priority of a logical channel to which the cell-specific beam failure recovery MAC CE corresponds.

In some embodiments, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds.

In some embodiments, a priority of a logical channel to which the transmission reception point-specific beam failure recovery MAC CE corresponds is identical to a priority of a logical channel to which a Sidelink Configured Grant Confirmation MAC CE corresponds.

In some embodiments, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds.

In some embodiments, a priority of a logical channel to which the transmission reception point-specific beam failure recovery MAC CE corresponds is identical to a priority of a logical channel to which an LBT failure MAC CE corresponds.

In some embodiments, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.

Candidate beams (or may also be referred to as available beams or new beams) is described below.

In some embodiments, the MAC CE further includes: information of candidate beams.

In some embodiments, the information of candidate beams including an index of a synchronization signal block (SSB) or an index of a channel state information reference signal (CSI-RS), or the information of candidate beams indicating an order of occurrence in configured candidate beams.

In some embodiments, the candidate beams satisfying at least one of the following conditions that:
the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
reference signal received power (RSRP) is higher than a configured threshold;
a signal to interference plus noise ratio (SINR) is higher than a configured threshold;
a received signal strength indicator (RSSI) is higher than a configured threshold;
beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs;
measurement values of the beams/RSs paired therewith are higher than a configured threshold.

In some embodiments, a terminal equipment may select based on the implementation or arbitrarily select one or N of a plurality of candidate beams, or select one or N with the highest measurement value, or select one or N with the highest measurement value and with a measurement value of beams/RSs paired therewith being higher than a configured threshold, or select one or N with the highest measurement value and with the highest measurement value of beams/RSs paired therewith, N is an integer greater than 1.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

As can be known from the above embodiments, a terminal equipment generates a MAC CE, wherein the MAC CE indicates information of the TRP in which beam failure is detected or for which beam failure recovery is triggered. Hence, the terminal equipment may explicitly indicate information of the TRP to the network device, and the network device may take a TRP-level step dealing with a beam failure, so as to avoid wasting resources.

### Embodiments of a second aspect

The embodiments of the present disclosure provide a method for reporting beam failure information, which is described from a terminal equipment. The contents same as those in the embodiments of the first aspect are not repeated.

FIG. 16 is a schematic diagram of a method for reporting beam failure information in an embodiment of the present disclosure, as shown in FIG. 16, the method includes:
1601, a terminal equipment detects that a beam failure occurs in a link with a transmission reception point or beam failure recovery of the transmission reception point is triggered; and
1602, the terminal equipment indicates to a network device information that a beam failure is detected or beam failure recovery is triggered via another transmission reception point of a cell to which the transmission reception point belongs.

It should be noted that the above FIG. 16 is only schematic description of the embodiments of the present disclosure, but the present disclosure is not limited to this. For example, an execution order of each operation may be adjusted appropriately, moreover other some operations may be increased or reduced. Persons skilled in the art may make appropriate modifications according to the above contents, which are not limited to the description in the above FIG. 16.

In the embodiments of the present disclosure, a terminal equipment may indicate to a network device, information that a beam failure is detected or beam failure recovery is triggered via another transmission reception point (such as TRP-1) of a cell to which the transmission reception point (such as TRP-2) belongs. Hence, the terminal equipment may implicitly indicate information of the TRP to the network device, and the network device may take a step dealing with TRP-level beam failure, so as to avoid wasting resources.

In some embodiments, the information that a beam failure is detected or beam failure recovery is triggered is included in a transmission reception point (TRP)-specific beam failure recovery medium access control control element (TRP-specific BFR MAC CE).

In some embodiments, the information that a beam failure is detected or beam failure recovery is triggered includes: indication information indicating whether candidate beams or candidate reference signals are found. For example, a value of 1 bit of the information that a beam failure is detected or beam failure recovery is triggered indicates that candidate beams are configured and found, or indicates that candidate beams are configured and the MAC CE includes information of the candidate beams, or indicates that the MAC CE includes information of the candidate beams.

For example, 1 indicates that candidate beams are configured and found, or indicates that candidate beams are configured and the MAC CE includes information of the candidate beams, or indicates that the MAC CE includes information of the candidate beams. For another example, 0 indicates that candidate beams are configured and found, or indicates that candidate beams are configured and the MAC CE includes information of the candidate beams, or indicates that the MAC CE includes information of the candidate beams.

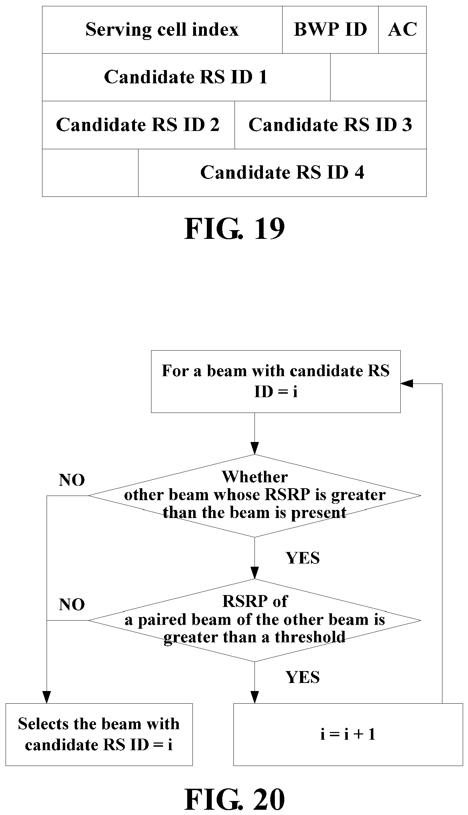

FIG. 17 is a schematic diagram of a TRP-specific BFR MAC CE in an embodiment of the present disclosure, schematically showing a format without candidate beams. FIG. 18 is another schematic diagram of a TRP-specific BFR MAC CE in an embodiment of the present disclosure, schematically showing a format with one candidate beam. FIG. 19 is another schematic diagram of a TRP-specific BFR MAC CE in an embodiment of the present disclosure, schematically showing a format with four (two pairs) candidate beams.

As shown in FIGS. 17 to 19, the TRP-specific BFR MAC CE may include a Serving Cell Index and a BWP ID, and further includes an AC field. Moreover, the TRP-specific BFR MAC CE may further include 0, 1 or a plurality of candidate RS IDs.

In some embodiments, the information that a beam failure is detected or beam failure recovery is triggered further includes: information of candidate beams. The information of candidate beams indicates a reference signal (RS).

For example, the information of candidate beams including an index of a synchronization signal block (SSB) or an index of a channel state information reference signal (CSI-RS). Or, the information of candidate beams indicates an order of occurrence in configured candidate beams, for example 0 indicates the first candidate beam, 1 indicates the second candidate beam, and so on.

In some embodiments, the candidate beams satisfying at least one of the following conditions that:
the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
reference signal received power (RSRP) is higher than a configured threshold, the RSRP e.g. is SS-RSRP or CSI-RSRP;
a signal to interference plus noise ratio (SINR) is higher than a configured threshold;
a received signal strength indicator (RSSI) is higher than a configured threshold;
beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs; or
measurement values of the beams/RSs paired therewith are higher than a configured threshold.

In some embodiments, the terminal equipment may select based on the implementation or arbitrarily select one or N of a plurality of candidate beams, or select one or N with the highest measurement value, or select one or N with the highest measurement value and with a measurement value of beams/RSs paired therewith being higher than a configured threshold, or select one or N with the highest measurement value and with the highest measurement value of beams/RSs paired therewith, N is an integer greater than 1.

For example, the terminal equipment may select one or more candidate beams. If more candidate beams are selected, they may further be added into this MAC CE according to a selected order.

FIG. 20 is a schematic diagram of beam selection in an embodiment of the present disclosure. As shown in FIG. 20, for a beam with the candidate RS ID being i, it may be determined whether one other beam (such as a beam with RS ID = j) is present, one other beam's RSRP is greater than RSRP of a beam with RS ID = i, if no, it shows that the RSRP value of the beam with RS ID = i is maximum, the beam with RS ID being i is selected;

If yes, it is further determined whether RSRP of a paired beam of the other beam (such as a beam with RS ID = j) is greater than a threshold (Thrl), if no, it shows that RSRP of the other beam is greater than RSRP of the beam with RS ID = i, while the paired beam of the other beam does not meet a threshold condition, the beam with RS ID being i is selected; if yes, it shows there is other beam whose RSRP is greater than RSRP with RS ID = i and whose paired beam meets the threshold condition, the beam with RS ID being i is not selected, a subsequent beam continues to be determined after i is incremented by 1.

In some embodiments, the information that a beam failure is detected or beam failure recovery is triggered may further include: information of a beam/RS paired with a selected candidate beam.

In some embodiments, the MAC CE is identified by a MAC subheader of a logic channel identifier (LCID) or an enhanced logic channel identifier (eLCID).

The contents of a MAC CE is schematically described above, and generation of a TRP-specific MAC CE is schematically described below.

In some embodiments, a medium access control (MAC) entity of the terminal equipment indicates a multiplexing and assembly procedure to generate a transmission reception point (TRP)-specific MAC CE; the TRP-specific MAC CE is different from a cell-specific MAC CE.

In some embodiments, a TRP-specific MAC CE may be generated using a independent procedure from a procedure of a cell-specific MAC CE. The TRP-specific MAC CE may include: a TRP-specific/TRP-level BFR MAC CE (Rel-17 BFR MAC CE), a TRP-specific/TRP-level BF MAC CE (Rel-17 BF MAC CE), a TRP-specific/TRP-level Truncated BFR MAC CE (Rel-17 Truncated BFR MAC CE), a TRP-specific/TRP-level Truncated BF MAC CE (Rel-17 Truncated BF MAC CE); one or any combination of the above types of MAC CEs may be generated independently.

For example, a procedure for generating the TRP-specific beam failure recovery MAC CE includes:
the MAC entity shall:
if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
else, trigger a scheduling request (SR) for TRP-specific beam failure recovery for each TRP for which the BFR has been triggered, not cancelled.

In some embodiments, a cell-specific MAC CE and a TRP-specific MAC CE may be generated using one procedure. The cell-specific MAC CE may include: a cell-specific BFR MAC CE (Rel-16 BFR MAC CE), a cell-specific Truncated BFR MAC CE (Rel-16 Truncated BFR MAC CE); the TRP-specific MAC CE (TRP-specific BFR MAC CE) may include: a TRP-specific/-level BFR MAC CE (Rel-17 BFR MAC CE), a TRP-specific/-level BF MAC CE (Rel-17 BF MAC CE). One or any combination of the above types of MAC CEs may be generated using the procedure.

For example, the TRP-specific beam failure recovery MAC CE is preferably generated.

For example:
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, two MAC CEs may be generated: a TRP-specific BFR MAC CE and a cell-specific BFR MAC CE (or a cell-specific Truncated BFR MAC CE).

For another example:
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, one MAC CE may be generated: a TRP-specific BFR MAC CE or a cell-specific BFR MAC CE (or a cell-specific Truncated BFR MAC CE).

For another example, the cell-specific beam failure recovery MAC CE is preferably generated.

For example:
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.

In this example, two MAC CEs may be generated: a cell-specific BFR MAC CE (or a cell-specific Truncated BFR MAC CE) and a TRP-specific BFR MAC CE.

For another example:
the MAC entity shall:
if uplink resources are available for a new transmission and if the uplink resources can accommodate the cell-specific beam failure recovery MAC CE plus its subheader as a result of LCP, instructs a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In this example, one MAC CE may be generated: a cell-specific BFR MAC CE (or a TRP-specific BFR MAC CE) or a cell-specific Truncated BFR MAC CE.

In some embodiments, a priority of the transmission reception point-specific beam failure recovery MAC CE is identical to a priority of the cell-specific beam failure recovery MAC CE.

For example:
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
else, trigger a scheduling request (SR) for TRP-specific beam failure recovery for each TRP for which the BFR has been triggered, not cancelled, and a scheduling request (SR) for cell-specific beam failure recovery for each cell for which the BFR has been triggered, not cancelled.

For another example:
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate a truncated cell-specific beam failure recovery MAC CE plus its subheader and the TRP-specific beam failure recovery MAC CE plus its subheader as a result of LCP, instruct a multiplexing and assembly procedure to generate the truncated cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
else, trigger a scheduling request (SR) for TRP-specific beam failure recovery for each TRP for which the BFR has been triggered, not cancelled, and a scheduling request (SR) for cell-specific beam failure recovery for each cell for which the BFR has been triggered, not cancelled.

A priority of the TRP-specific MAC CE is described below.

In some embodiments, a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds.

In some embodiments, a priority of a logical channel to which the transmission reception point-specific beam failure recovery MAC CE corresponds is identical to a priority of a logical channel to which the cell-specific beam failure recovery MAC CE corresponds.

In some embodiments, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds.

In some embodiments, a priority of a logical channel to which the transmission reception point-specific beam failure recovery MAC CE corresponds is identical to a priority of a logical channel to which a Sidelink Configured Grant Confirmation MAC CE corresponds.

In some embodiments, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds.

In some embodiments, a priority of a logical channel to which the transmission reception point-specific beam failure recovery MAC CE corresponds is identical to a priority of a logical channel to which an LBT failure MAC CE corresponds.

In some embodiments, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

As can be known from the above embodiments, a terminal equipment may indicate to a network device information that a beam failure is detected or beam failure recovery is triggered via another TRP of a cell to which the TRP where beam failure is detected or for which beam failure recovery is triggered belongs. Hence, the terminal equipment may implicitly indicate information of the TRP to the network device, and the network device may take a step dealing with TRP-level beam failure, so as to avoid wasting resources.

### Embodiments of a third aspect

The following is further described based on the embodiments of the first and second aspects, the contents same as those in the embodiments of the first and second aspects are not repeated. In the embodiments of the third aspect, the embodiments of the first and second aspects may be combined.

In some embodiments, a terminal equipment detects that a beam failure occurs in a link with a transmission reception point or beam failure recovery of the transmission reception point is triggered; generates a MAC CE according to configuration of carrier aggregation (CA) and/or uplink resources, wherein the MAC CE indicates information of the transmission reception point where beam failure is detected or for which beam failure recovery is triggered, or indicates to a network device information that a beam failure is detected or beam failure recovery is triggered via another transmission reception point of a cell to which the transmission reception point belongs.

For example, the terminal equipment generates a MAC CE in the case where the carrier aggregation is not configured, wherein the MAC CE indicates information of the transmission reception point in which beam failure is detected or for which beam failure recovery is triggered. Moreover, the terminal equipment may also report the MAC CE to the network device;
in the case where the carrier aggregation is configured, the terminal equipment indicates to a network device, information that a beam failure is detected or beam failure recovery is triggered via another transmission reception point of a cell to which the transmission reception point belongs.

For another example, the terminal equipment generates a MAC CE in the case where the carrier aggregation is configured and uplink resources can accommodate the MAC CE, wherein the MAC CE indicates information of the transmission reception point in which beam failure is detected or for which beam failure recovery is triggered. Moreover, the terminal equipment may also report the MAC CE to the network device;

in the case where the carrier aggregation is not configured or the carrier aggregation is configured but uplink resources cannot accommodate the MAC CE, the terminal equipment indicates to a network device, information that a beam failure is detected or beam failure recovery is triggered via another transmission reception point of a cell to which the transmission reception point belongs.

The embodiments of the present disclosure further provide a method for receiving beam failure information, including:
a network device receives a MAC CE transmitted by a terminal equipment, wherein the MAC CE indicates information of the transmission reception point where beam failure is detected or for which beam failure recovery is triggered, or receives information, indicated by the terminal equipment, that a beam failure is detected or beam failure recovery is triggered via another transmission reception point of a cell to which the transmission reception point belongs.

About configuration of the network device and interaction related to the terminal equipment, the embodiments of the first and second aspects may be referred to.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

As may be known from the above embodiments, according to configuration of carrier aggregation (CA) and/or uplink resources, a terminal equipment generates a MAC CE, wherein the MAC CE indicates information of a TRP where beam failure is detected or for which beam failure recovery is triggered, or the terminal equipment indicates to a network device information that a beam failure is detected or beam failure recovery is triggered via another TRP of a cell to which the TRP where beam failure is detected or for which beam failure recovery is triggered belongs. Hence, the terminal equipment may explicitly or implicitly indicate information of the TRP to the network device, and the network device may take a step dealing with TRP-level beam failure, so as to avoid wasting resources.

### Embodiments of a fourth aspect

The embodiments of the present disclosure provide an apparatus for generating beam failure information. The apparatus may, for example, be a terminal equipment, or it may be one or more parts or components configured on the terminal equipment. The contents same as those in the embodiments of the first to third aspects are not repeated.

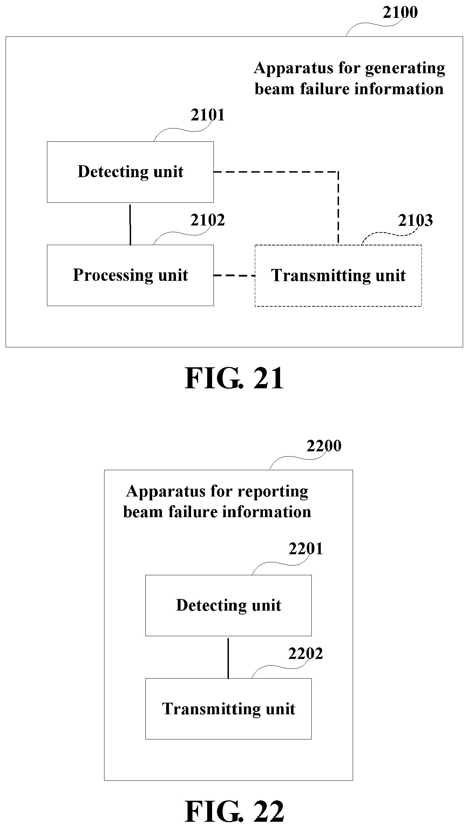

FIG. 21 is a schematic diagram of an apparatus for generating beam failure information in an embodiment of the present disclosure, as shown in FIG. 21, an apparatus 2100 for generating beam failure information includes:
a detecting unit 2101 configured to detect that a beam failure occurs in a link with a transmission reception point (TRP) or beam failure recovery of the transmission reception point is triggered; and
a processing unit 2102 configured to generate a medium access control (MAC) control element (CE), wherein the MAC CE indicates information of the transmission reception point in which beam failure is detected or for which beam failure recovery is triggered.

In some embodiments, the information of the transmission reception point includes: an index of the transmission reception point in which beam failure is detected or for which beam failure recovery is triggered.

In some embodiments, a value of 1 bit in the MAC CE indicates that beam failure is detected in the transmission reception point to which the control resource pool with an index of 0 corresponds or beam failure recovery is triggered for the transmission reception point to which the control resource pool with an index of 0 corresponds;
another value of the 1 bit indicates that beam failure is detected in the transmission reception point to which the control resource pool with an index of 1 corresponds or beam failure recovery is triggered for the transmission reception point to which the control resource pool with an index of 1 corresponds.

In some embodiments, a value of 1 bit in the MAC CE indicates that a beam failure is detected in a transmission reception point with an index of 0 or beam failure recovery is triggered for the transmission reception point with an index of 0;
another value of the 1 bit indicates that a beam failure is detected in a transmission reception point with an index of 1 or beam failure recovery is triggered for the transmission reception point with an index of 1.

In some embodiments, a value of the 1 bit in the MAC CE indicates that a beam failure is detected in a transmission reception point to which a beam failure detection reference signal set (BFD-RS set) with an index of 0 corresponds or beam failure recovery is triggered for the transmission reception point to which a beam failure detection reference signal set with an index of 0 corresponds, or indicates that a beam failure is detected in all beams to which a beam failure detection reference signal set with an index of 0 corresponds or beam failure recovery is triggered for all beams to which a beam failure detection reference signal set (BFD-RS set) with an index of 0 corresponds.

Another value of the 1 bit indicates that a beam failure is detected in a transmission reception point to which a beam failure detection reference signal set (BFD-RS set) with an index of 1 corresponds or beam failure recovery is triggered for the transmission reception point to which a beam failure detection reference signal set with an index of 1 corresponds, or indicates that a beam failure is detected in all beams to which a beam failure detection reference signal set with an index of 1 corresponds or beam failure recovery is triggered for all beams to which a beam failure detection reference signal set (BFD-RS set) with an index of 1 corresponds.

In some embodiments, R bit(s) in the beam failure recovery (BFR) MAC CE or truncated beam failure recovery (truncated BFR) MAC CE is(are) used to carry/indicate/represent an index of the transmission reception point in which beam failure is detected or for which beam failure recovery is triggered.

In some embodiments, a value of 2 bits in the MAC CE indicates one or any combination of the following that:
beam failure is not detected in transmission reception points or beam failure recovery is not triggered for the transmission reception points;
beam failure is detected in the transmission reception point to which the control resource pool with an index of 0 corresponds or beam failure recovery is triggered for the transmission reception point to which the control resource pool with an index of 0 corresponds;
beam failure is detected in the transmission reception point to which the control resource pool with an index of 1 corresponds or beam failure recovery is triggered for the transmission reception point to which the control resource pool with an index of 1 corresponds;
beam failure is detected both in the transmission reception point to which the control resource pool with an index of 0 corresponds and the transmission reception point to which the control resource pool with an index of 1 corresponds or beam failure recovery is triggered both for the transmission reception point to which the control resource pool with an index of 0 corresponds and the transmission reception point to which the control resource pool with an index of 1 corresponds.

In some embodiments, a value of 2 bits in the MAC CE indicates one or any combination of the following that:
beam failure is not detected in transmission reception points or beam failure recovery is not triggered for the transmission reception points;
beam failure is detected in a transmission reception point with an index of 0 or beam failure recovery is triggered for the transmission reception point with an index of 0;
beam failure is detected in a transmission reception point with an index of 1 or beam failure recovery is triggered for the transmission reception point with an index of 1;
beam failure is detected both in the transmission reception point with an index of 0 and the transmission reception point with an index of 1 or beam failure recovery is triggered both for the transmission reception point with an index of 0 and the transmission reception point with an index of 1.

In some embodiments, a value of 2 bits in the MAC CE indicates one or any combination of the following that:
beam failure is not detected in transmission reception points or beam failure recovery is not triggered for the transmission reception points;
a beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or a beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds;
a beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or a beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds;
a beam failure is detected in both the transmission reception point to which the beam failure detection reference signal set (BFD-RS set) with an index of 0 corresponds and the transmission reception point to which the beam failure detection reference signal set (BFD-RS set) with an index of 1 corresponds or beam failure recovery is triggered for both the transmission reception point to which the beam failure detection reference signal set (BFD-RS set) with an index of 0 corresponds and the transmission reception point to which the beam failure detection reference signal set (BFD-RS set) with an index of 1 corresponds, or a beam failure is detected in all beams to which the beam failure detection reference signal set (BFD-RS set) with an index of 0 corresponds and all beams to which the beam failure detection reference signal set (BFD-RS set) with an index of 1 corresponds or beam failure recovery is triggered for all beams to which the beam failure detection reference signal set (BFD-RS set) with an index of 0 corresponds and all beams to which the beam failure detection reference signal set (BFD-RS set) with an index of 1 corresponds.

In some embodiments, R bit(s) and AC field(s) in a beam failure recovery MAC CE or truncated beam failure recovery MAC CE are used to carry/indicate/represent an index of the transmission reception point in which beam failure is detected or for which beam failure recovery is triggered.

In some embodiments, the MAC CE further includes: a type in which beam failure is detected or a type for which beam failure recovery is triggered.

In some embodiments, a value of the 1 bit in the MAC CE indicates that cell-specific beam failures or beam failures of all beams are detected or cell-specific beam failure recovery or beam failure recovery of all beams is triggered, and another value of the 1 bit indicates that transmission reception point (TRP)-specific beam failures or beam failures of a part of beams are detected or TRP-specific beam failure recovery or beam failure recovery of a part of beams is triggered; or
a value of the 1 bit in the MAC CE indicates that cell-specific beam failures or beam failures of all beams are detected or cell-specific beam failure recovery or beam failure recovery of all beams is triggered, and another value of the 1 bit indicates that non-cell-specific beam failures or beam failures of not all beams are detected or non-cell-specific beam failure recovery or beam failure recovery of not all beam is triggered; or
a value of the 1 bit in the MAC CE indicates that TRP-specific beam failures or beam failures of a part of beams are detected or TRP-specific beam failure recovery or beam failure recovery of a part of beams is triggered, and another value of the 1 bit indicates that non-TRP-specific beam failures or beam failures of not a part of beams are detected or non-TRP-specific beam failure recovery or beam failure recovery of not a part of beams is triggered.

In some embodiments, R bit(s) in the beam failure recovery MAC CE or truncated beam failure recovery (truncated BFR) MAC CE is(are) used to carry/indicate/represent a type in which beam failure is detected or a type in which beam failure recovery is triggered.

In some embodiments, a value of the 2 bits in the MAC CE indicates that cell-specific beam failures or beam failures of all beams are not detected or cell-specific beam failure recovery or beam failure recovery of all beams is not triggered, and TRP-specific beam failures or beam failures of a part of beams are not detected or TRP-specific beam failure recovery or beam failure recovery of a part of beams is not triggered; another value of the 2 bits indicates that cell-specific beam failures or beam failures of all beams are detected or cell-specific beam failure recovery or beam failure recovery of all beams is triggered; a further value of the 2 bits indicates that TRP-specific beam failures or beam failures of a part of beams are detected or TRP-specific beam failure recovery or beam failure recovery of a part of beams is triggered; yet another value of the 2 bits indicates that cell-specific beam failures or beam failures of all beams are detected or cell-specific beam failure recovery or beam failure recovery of all beams is triggered, and TRP-specific beam failures or beam failures of a part of beams are detected or TRP-specific beam failure recovery or beam failure recovery of a part of beams is triggered;
a value of the 2 bits in the MAC CE indicates that cell-specific beam failures or beam failures of all beams are not detected or cell-specific beam failure recovery or beam failure recovery of all beams is not triggered, and non-cell-specific beam failures or beam failures of not all beams are not detected or non-cell-specific beam failure recovery or beam failure recovery of not all beams is not triggered; another value of the 2 bits indicates that cell-specific beam failures or beam failures of all beams are detected or cell-specific beam failure recovery or beam failure recovery of all beams is triggered; a further value of the 2 bits indicates that non-cell-specific beam failures or beam failures of not all beams are detected or non-cell-specific beam failure recovery or beam failure recovery of not all beams is triggered; yet another value of the 2 bits indicates that cell-specific beam failures or beam failures of all beams are detected or cell-specific beam failure recovery or beam failure recovery of all beams is triggered, and non-cell-specific beam failures or beam failures of not all beams are detected or non-cell-specific beam failure recovery or beam failure recovery of not all beams is triggered;
a value of the 2 bits in the MAC CE indicates that non-TRP-specific beam failures or beam failures of not a part of beams are not detected or non-TRP-specific beam failure recovery or beam failure recovery of not a part of beams is not triggered, and TRP-specific beam failures or beam failures of a part of beams are not detected or TRP-specific beam failure recovery or beam failure recovery of a part of beams is not triggered; another value of the 2 bits indicates that non-TRP-specific beam failures or beam failures of not a part of beams are detected or non-TRP-specific beam failure recovery or beam failure recovery of not a part of beams is triggered; another value of the 2 bits indicates that TRP-specific beam failures or beam failures of a part of beams are detected or TRP-specific beam failure recovery or beam failure recovery of a part of beams is triggered; another value of the 2 bits indicates that non-TRP-specific beam failures or beam failures of not a part of beams are detected or non-TRP-specific beam failure recovery or beam failure recovery of not a part of beams is triggered, and TRP-specific beam failures or beam failures of a part of beams are detected or TRP-specific beam failure recovery or beam failure recovery of a part of beams is triggered.

In some embodiments, R bit(s) and AC field(s) in the beam failure recovery MAC CE or truncated beam failure recovery (truncated BFR) MAC CE are used to carry/indicate/represent a type in which beam failure is detected or a type in which beam failure recovery is triggered.

In some embodiments, the MAC CE further includes at least one or any combination of the following information: information of a cell to which the transmission reception point where a beam failure is detected or beam failure recovery is triggered belongs, whether information of candidate beams is found, and information of candidate beams.

In some embodiments, as shown in FIG. 21, the apparatus 2100 for generating beam failure information may further include:
a transmitting unit 2103 configured to transmit the MAC CE to a network device,
wherein the MAC CE is transferred to the network device via another transmission reception point of the cell to which the transmission reception point belongs, or the MAC CE is transferred to the network device via a transmission reception point of a cell different from the cell to which the transmission reception point belongs co-located with the transmission reception point, or the MAC CE is reported to the network device via a cell different from the cell to which the transmission reception point belongs.

In some embodiments, the MAC CE is identified by a MAC subheader of a logic channel identifier (LCID) or an enhanced logic channel identifier (eLCID).

In some embodiments, the MAC CE is transmitted using one of the following uplink grants:
an uplink grant of a TRP where a TRP-specific beam failure is not detected of a cell to which the TRP where a TRP-specific beam failure is detected belongs;
an uplink grant of the TRP of a cell different from the cell to which the TRP where a TRP-specific beam failure is detected belongs co-located with the TRP where a TRP-specific beam failure is detected;
an uplink grant of the cell different from the cell to which the TRP where a TRP-specific beam failure is detected belongs.

In some embodiments, in a case where there are a plurality of available resources, an uplink grant is selected to transmit the MAC CE based on a predefined or network configuration, or an uplink grant is selected to transmit the MAC CE based on implementation or an uplink grant is randomly selected to transmit the MAC CE.

In some embodiments, a medium access control (MAC) entity indicates a multiplexing and assembly procedure to generate a TRP-specific beam failure recovery MAC CE; the TRP-specific beam failure recovery MAC CE is different from a cell-specific beam failure recovery MAC CE.

In some embodiments, a TRP-specific MAC CE is generated using an independent procedure from a procedure of a cell-specific MAC CE.

In some embodiments, a truncated TRP-specific beam failure recovery MAC CE is supported; a procedure for generating the TRP-specific beam failure recovery MAC CE includes:
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled.

In some embodiments, a truncated TRP-specific beam failure recovery MAC CE is not supported; a procedure for generating the TRP-specific beam failure recovery MAC CE includes:
the MAC entity shall:
if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
else, trigger a scheduling request (SR) for TRP-specific beam failure recovery for each TRP for which the BFR has been triggered, not cancelled.

In some embodiments, a cell-specific MAC CE and a TRP-specific MAC CE are generated using one procedure.

In some embodiments, a truncated TRP-specific beam failure recovery MAC CE is supported; the TRP-specific beam failure recovery MAC CE is preferably generated.

In some embodiments,
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources, can accommodate a truncated cell-specific beam failure recovery MAC CE plus its subheader the MAC entity instructs a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In some embodiments,
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In some embodiments, a truncated TRP-specific beam failure recovery MAC CE is supported; the cell-specific beam failure recovery MAC CE is preferably generated.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
else, trigger a scheduling request (SR) for TRP-specific beam failure recovery for each TRP for which the BFR has been triggered, not cancelled.

In some embodiments, a truncated TRP-specific beam failure recovery MAC CE is supported; a priority of the TRP-specific beam failure recovery MAC CE is identical with that of the cell-specific beam failure recovery MAC CE.

In some embodiments,
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader and a truncated TRP-specific beam failure recovery MAC CE plus its subheader as a result of LCP, t instruct a multiplexing and assembly procedure to generate the truncated cell-specific beam failure recovery MAC CE and the truncated TRP-specific beam failure recovery MAC CE;
else if uplink resources are available for a new transmission and if the uplink resources can accommodate a truncated cell-specific beam failure recovery MAC CE plus its subheader or a truncated TRP-specific beam failure recovery MAC CE plus its subheader as a result of LCP, instruct a multiplexing and assembly procedure to generate the truncated cell-specific beam failure recovery MAC CE or the truncated TRP-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

In some embodiments, a truncated TRP-specific beam failure recovery MAC CE is not supported; the TRP-specific beam failure recovery MAC CE is preferably generated.

In some embodiments,
the MAC entity shall:
if uplink resources are available for a new transmission and if the uplink resources can accommodate the TRP-specific beam failure recovery MAC CE plus its subheader as a result of LCP, the MAC entity instructs a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In some embodiments, a truncated TRP-specific beam failure recovery MAC CE is not supported; the cell-specific beam failure recovery MAC CE is preferably generated.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In some embodiments, a truncated TRP-specific beam failure recovery MAC CE is not supported; a priority of the TRP-specific beam failure recovery MAC CE is identical with that of the cell-specific beam failure recovery MAC CE.

In some embodiments,
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

In some embodiments, a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds;
or, a priority of a logical channel to which the transmission reception point-specific beam failure recovery MAC CE corresponds is identical to a priority of a logical channel to which the cell-specific beam failure recovery MAC CE corresponds;
or, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds;
or, a priority of a logical channel to which the transmission reception point-specific beam failure recovery MAC CE corresponds is identical to a priority of a logical channel to which a Sidelink Configured Grant Confirmation MAC CE corresponds;
or, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds;
or, a priority of a logical channel to which the transmission reception point-specific beam failure recovery MAC CE corresponds is identical to a priority of a logical channel to which an LBT failure MAC CE corresponds;
or, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.

In some embodiments, the MAC CE further includes: information of candidate beams.

In some embodiments, the information of candidate beams including an index of a synchronization signal block (SSB) or an index of a channel state information reference signal (CSI-RS), or the information of candidate beams indicating an order of occurrence in configured candidate beams.

In some embodiments, the candidate beams satisfying at least one of the following conditions that:
the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
reference signal received power (RSRP) is higher than a configured threshold;
a signal to interference plus noise ratio (SINR) is higher than a configured threshold;
a received signal strength indicator (RSSI) is higher than a configured threshold;
beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs; or
measurement values of the beams/RSs paired therewith are higher than a configured threshold.

In some embodiments, selecting based on the implementation or arbitrarily selecting one or N of a plurality of candidate beams, or selecting one or N with the highest measurement value, or selecting one or N with the highest measurement value and with a measurement value of beams/RSs paired therewith being higher than a configured threshold, or selecting one or N with the highest measurement value and with the highest measurement value of beams/RSs paired therewith, N is an integer greater than 1.

In some embodiments, the detecting unit 2101 detects that a beam failure occurs in a link with a transmission reception point or beam failure recovery of the transmission reception point is triggered; the processing unit 2102 generates a MAC CE according to configuration of carrier aggregation (CA) and/or uplink resources, wherein the MAC CE indicates information of the transmission reception point where beam failure is detected or for which beam failure recovery is triggered, or the transmitting unit 2103 indicates to a network device information that a beam failure is detected or beam failure recovery is triggered via another transmission reception point of a cell to which the transmission reception point belongs.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 2100 for generating beam failure information may further include other components or modules. For detailed contents of these components or modules, relevant technologies may be referred to.

Moreover, for the sake of simplicity, FIG. 21 only demonstratively shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, a terminal equipment generates a MAC CE, wherein the MAC CE indicates information of the TRP in which beam failure is detected or for which beam failure recovery is triggered. Hence, the terminal equipment may explicitly indicate information of the TRP to the network device, and the network device may take a step dealing with TRP-level beam failure, so as to avoid wasting resources.

### Embodiments of a fifth aspect

The embodiments of the present disclosure provide an apparatus for reporting beam failure information. The apparatus may, for example, be a terminal equipment, or it may be one or more parts or components configured on the terminal equipment. The contents same as those in the embodiments of the first to third aspects are not repeated.

FIG. 22 is a schematic diagram of an apparatus for reporting beam failure information in an embodiment of the present disclosure, as shown in FIG. 22, an apparatus 2200 for reporting beam failure information includes:
a detecting unit 2201 configured to detect that a beam failure occurs in a link with a transmission reception point or beam failure recovery of the transmission reception point is triggered; and
a transmitting unit 2202 configured to indicate to a network device information that a beam failure is detected or beam failure recovery is triggered via another transmission reception point of a cell to which the transmission reception point belongs.

In some embodiments, the information that a beam failure is detected or beam failure recovery is triggered is included in a transmission reception point (TRP)-specific beam failure recovery MAC CE.

In some embodiments, the information that a beam failure is detected or beam failure recovery is triggered includes: indication information indicating whether candidate beams or candidate reference signals are found.

In some embodiments, a value of 1 bit of the information that a beam failure is detected or beam failure recovery is triggered indicates that candidate beams are configured and found, or indicates that candidate beams are configured and the MAC CE includes information of the candidate beams, or indicates that the MAC CE includes information of the candidate beams.

In some embodiments, the information that a beam failure is detected or beam failure recovery is triggered further includes: information of candidate beams, wherein the information of candidate beams indicates a reference signal.

In some embodiments, the information of candidate beams including an index of a synchronization signal block (SSB) or an index of a channel state information reference signal (CSI-RS), or the information of candidate beams indicating an order of occurrence in configured candidate beams.

In some embodiments, the candidate beams satisfying at least one of the following conditions that:
the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
reference signal received power (RSRP) is higher than a configured threshold;
a signal to interference plus noise ratio (SINR) is higher than a configured threshold;
a received signal strength indicator (RSSI) is higher than a configured threshold;
beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs; or
measurement values of the beams/RSs paired therewith are higher than a configured threshold.

In some embodiments, selecting based on the implementation or arbitrarily selecting one or N of a plurality of candidate beams, or selecting one or N with the highest measurement value, or selecting one or N with the highest measurement value and with a measurement value of beams/RSs paired therewith being higher than a configured threshold, or selecting one or N with the highest measurement value and with the highest measurement value of beams/RSs paired therewith, N is an integer greater than 1.

In some embodiments, the information that a beam failure is detected or beam failure recovery is triggered further includes: information of a beam/RS paired with a selected candidate beam.

In some embodiments, the MAC CE is identified by a MAC subheader of a logic channel identifier (LCID) or an enhanced logic channel identifier (eLCID).

In some embodiments, a medium access control (MAC) entity indicates a multiplexing and assembly procedure to generate a transmission reception point (TRP)-specific beam failure recovery MAC CE; the TRP-specific beam failure recovery MAC CE is different from a cell-specific beam failure recovery MAC CE.

In some embodiments, a TRP-specific MAC CE is generated using a procedure independent of a cell-specific MAC CE procedure.

In some embodiments, a procedure for generating the TRP-specific beam failure recovery MAC CE includes:
the MAC entity shall:
if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
else, trigger a scheduling request (SR) for TRP-specific beam failure recovery for each TRP for which the BFR has been triggered, not cancelled.

In some embodiments, a cell-specific MAC CE and the TRP-specific MAC CE are generated using a procedure.

In some embodiments, the TRP-specific beam failure recovery MAC CE is preferably generated.

In some embodiments,
the MAC entity shall:
if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.

In some embodiments, the cell-specific beam failure recovery MAC CE is preferably generated.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled;
if uplink resources are available for a new transmission and if the uplink resources can accommodate the TRP-specific beam failure recovery MAC CE plus its subheader as a result of LCP, t instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled.

In some embodiments,
the MAC entity shall:
if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
else, trigger a scheduling request (SR) for TRP-specific beam failure recovery for each TRP for which the BFR has been triggered, not cancelled;
else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
else, trigger a scheduling request (SR) for cell-specific beam failure recovery for each cell for which the BFR has been triggered, not cancelled.
In some embodiments, a priority of the transmission reception point-specific beam failure recovery MAC CE is identical to a priority of the cell-specific beam failure recovery MAC CE.

In some embodiments,
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

In some embodiments,
the MAC entity shall:
if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
else if uplink resources are available for a new transmission and if the uplink resources can accommodate a truncated cell-specific beam failure recovery MAC CE plus its subheader and the TRP-specific beam failure recovery MAC CE plus its subheader as a result of LCP, instruct a multiplexing and assembly procedure to generate the truncated cell-specific beam failure recovery MAC CE and the TRP-specific beam failure recovery MAC CE;
else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.

In some embodiments, a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds;
or, a priority of a logical channel to which the transmission reception point-specific beam failure recovery MAC CE corresponds is identical to a priority of a logical channel to which the cell-specific beam failure recovery MAC CE corresponds;
or, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds;
or, a priority of a logical channel to which the transmission reception point-specific beam failure recovery MAC CE corresponds is identical to a priority of a logical channel to which a Sidelink Configured Grant Confirmation MAC CE corresponds;
or, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds;
or, a priority of a logical channel to which the transmission reception point-specific beam failure recovery MAC CE corresponds is identical to a priority of a logical channel to which an LBT failure MAC CE corresponds;
or, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 2200 for reporting beam failure information may further include other components or modules. For detailed contents of these components or modules, relevant technologies may be referred to.

Moreover, for the sake of simplicity, FIG. 22 only demonstratively shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, a terminal equipment indicates to a network device information that a beam failure is detected or beam failure recovery is triggered via another TRP of a cell to which the TRP where beam failure is detected or for which beam failure recovery is triggered belongs. Hence, the terminal equipment may implicitly indicate information of the TRP to the network device, and the network device may take a step dealing with TRP-level beam failure, so as to avoid wasting resources.

### Embodiments of a sixth aspect

The embodiments of the present disclosure further provide a communication system, FIG.1 may be referred to, the contents same as those in the embodiments of the first to fifth aspects are not repeated.

In some embodiments, the communication system may include:
a terminal equipment, configured to detect that a beam failure occurs in a link with a transmission reception point (TRP) or beam failure recovery of the transmission reception point is triggered; and generate a medium access control (MAC) control element (CE), wherein the MAC CE indicates information of the transmission reception point in which beam failure is detected or for which beam failure recovery is triggered; and
a network device, configured to receive information of the transmission reception point in which beam failure is detected or for which beam failure recovery is triggered.

In some embodiments, the communication system may include:
a terminal equipment, configured to detect that a beam failure occurs in a link with a transmission reception point or beam failure recovery of the transmission reception point is triggered; and to indicate to a network device information that a beam failure is detected or beam failure recovery is triggered via another transmission reception point of a cell to which the transmission reception point belongs; and
a network device, configured to receive the information that a beam failure is detected or beam failure recovery is triggered.

The embodiments of the present disclosure further provide a network device, for example may be a base station, but the present disclosure is not limited to this, it may also be other network device.

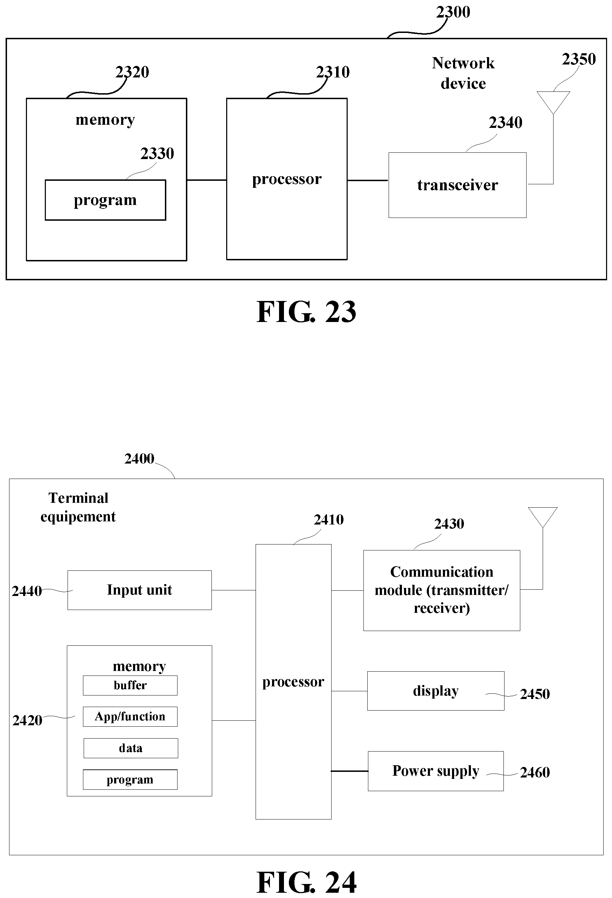

FIG. 23 is a composition schematic diagram of a network device in the embodiments of the present disclosure. As shown in FIG. 23, a network device 2300 may include: a processor 2310 (such as a central processing unit (CPU)) and a memory 2320; the memory 2320 is coupled to the processor 2310. The memory 2320 may store various data; moreover, also stores a program 2330 for information processing, and executes the program 2330 under the control of the processor 2310.

For example, the processor 2310 may be configured to execute a program to implement the method for receiving beam failure information as described in the embodiments of the first to third aspects. For example, a processor 2410 may be configured to perform the following controls: receiving a MAC CE transmitted by a terminal equipment, wherein the MAC CE indicates information of the transmission reception point where beam failure is detected or for which beam failure recovery is triggered, or receiving information, indicated by the terminal equipment, that a beam failure is detected or beam failure recovery is triggered via another transmission reception point of a cell to which the transmission reception point belongs.

In addition, as shown in FIG. 23, the network device 2300 may further include: a transceiver 2340 and an antenna 2350, etc.; wherein the functions of said components are similar to relevant arts, which are not repeated here. It's worth noting that the network device 2300 does not have to include all the components shown in FIG. 23. Moreover, the network device 2300 may also include components not shown in FIG. 23, relevant arts may be referred to.

The embodiments of the present disclosure further provide a terminal equipment, but the present disclosure is not limited to this, it may also be other device.

FIG. 24 is a schematic diagram of a terminal equipment in the embodiments of the present disclosure. As shown in FIG. 24, a terminal equipment 2400 may include a processor 2410 and a memory 2420; the memory 2420 stores data and programs, and is coupled to the processor 2410. It's worth noting that this figure is exemplary; other types of structures may also be used to supplement or replace this structure, so as to realize a telecommunication function or other functions.

For example, the processor 2410 may be configured to execute a program to implement the method for generating beam failure information as described in the embodiments of the first aspect. For example, the processor 2410 may be configured to perform the following controls: detecting that a beam failure occurs in a link with a transmission reception point (TRP) or beam failure recovery of the transmission reception point is triggered; and generating a medium access control (MAC) control element (CE), wherein the MAC CE indicates information of the transmission reception point in which beam failure is detected or for which beam failure recovery is triggered.

For another example, the processor 2410 may be configured to execute a program to implement the method for reporting beam failure information as described in the embodiments of the second aspect. For example, the processor 2410 may be configured to perform the following controls: detecting that a beam failure occurs in a link with a transmission reception point or beam failure recovery of the transmission reception point is triggered; and indicating to a network device information that a beam failure is detected or beam failure recovery is triggered via another transmission reception point of a cell to which the transmission reception point belongs.

For example, the processor 2410 may be configured to execute a program to implement the method for reporting beam failure information as described in the embodiments of the third aspect. For example, the processor 2410 may be configured to perform the following controls: detecting that a beam failure occurs in a link with a transmission reception point or beam failure recovery of the transmission reception point is triggered; generating a MAC CE according to configuration of carrier aggregation (CA) and/or uplink resources, wherein the MAC CE indicates information of the transmission reception point where beam failure is detected or for which beam failure recovery is triggered, or indicating to a network device information that a beam failure is detected or beam failure recovery is triggered via another transmission reception point of a cell to which the transmission reception point belongs.

As shown in FIG. 24, the terminal equipment 2400 may further include: a communication module 2430, an input unit 2440, a display 2450 and a power source 2460. The functions of said components are similar to prior arts, which are not repeated here. It's worth noting that the terminal equipment 2400 does not have to include all the components shown in FIG. 24, said components are not indispensable. Moreover, the terminal equipment 2400 may also include components not shown in FIG. 24, prior arts may be referred to.

The embodiments of the present disclosure also provide a computer program, wherein when a terminal equipment executes the program, the program enables the terminal equipment to execute the method for generating beam failure information as described in the embodiments of the first aspect, or the method for reporting beam failure information as described in the embodiments of the second and third aspects.

The embodiments of the present disclosure further provide a storage medium in which a computer program is stored, wherein the computer program enables a terminal equipment to execute the method for generating beam failure information as described in the embodiments of the first aspect, or the method for reporting beam failure information as described in the embodiments of the second and third aspects.

The apparatus and method in the present disclosure may be realized by hardware, or may be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure also relates to a storage medium storing the program, such as a hard disk, a magnetic disk, an optical disk, a DVD, a flash memory and the like.

By combining with the method/apparatus described in the embodiments of the present disclosure, it may be directly reflected as hardware, a software executed by a processor, or a combination of the two. For example, one or more in the functional block diagram or one or more combinations in the functional block diagram as shown in the figures may correspond to software modules of a computer program flow, and may also correspond to hardware modules. These software modules may respectively correspond to the steps as shown in the figures. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the figures may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the figures may be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure based on the spirit and principle of the present disclosure, these variations and modifications are also within the scope of the present disclosure.

As for the implementations including the above embodiments, the following supplements are also disclosed:
1. A method for generating beam failure information, including:
   detecting, by a terminal equipment, that a beam failure occurs in a link with a transmission reception point (TRP) or beam failure recovery of the transmission reception point is triggered; and
   generating, by the terminal equipment, a medium access control (MAC) control element (CE), wherein the MAC CE indicates information of the transmission reception point in which beam failure is detected or for which beam failure recovery is triggered.
2. The method according to Supplement 1, wherein the information of the transmission reception point includes: an index or an identifier of the transmission reception point in which beam failure is detected or for which beam failure recovery is triggered.
3. The method according to Supplement 2, wherein a value of 1 bit in the MAC CE indicates that beam failure is detected in the transmission reception point to which the control resource pool with an index of 0 corresponds or beam failure recovery is triggered for the transmission reception point to which the control resource pool with an index of 0 corresponds;
   another value of the 1 bit indicates that beam failure is detected in the transmission reception point to which the control resource pool with an index of 1 corresponds or beam failure recovery is triggered for the transmission reception point to which the control resource pool with an index of 1 corresponds.
4. The method according to Supplement 2, wherein a value of 1 bit in the MAC CE indicates that a beam failure is detected in a transmission reception point with an index of 0 or beam failure recovery is triggered for the transmission reception point with an index of 0;
   another value of the 1 bit indicates that a beam failure is detected in a transmission reception point with an index of 1 or beam failure recovery is triggered for the transmission reception point with an index of 1.
5. The method according to Supplement 2, wherein a value of the 1 bit in the MAC CE indicates that a beam failure is detected in a transmission reception point to which a beam failure detection reference signal set (BFD-RS set) with an index of 0 corresponds or beam failure recovery is triggered for the transmission reception point to which a beam failure detection reference signal set with an index of 0 corresponds, or indicates that a beam failure is detected in all beams to which a beam failure detection reference signal set with an index of 0 corresponds or beam failure recovery is triggered for all beams to which a beam failure detection reference signal set (BFD-RS set) with an index of 0 corresponds;
   another value of the 1 bit indicates that a beam failure is detected in a transmission reception point to which a beam failure detection reference signal set (BFD-RS set) with an index of 1 corresponds or beam failure recovery is triggered for the transmission reception point to which a beam failure detection reference signal set with an index of 1 corresponds, or indicates that a beam failure is detected in all beams to which a beam failure detection reference signal set with an index of 1 corresponds or beam failure recovery is triggered for all beams to which a beam failure detection reference signal set (BFD-RS set) with an index of 1 corresponds.
6. The method according to any one of Supplements 2 to 5, wherein R bit(s) in the beam failure recovery (BFR) MAC CE or the truncated beam failure recovery (truncated BFR) MAC CE is(are) used to carry/indicate/represent an index of the transmission reception point in which beam failure is detected or for which beam failure recovery is triggered.
7. The method according to Supplement 2, wherein a value of 2 bits in the MAC CE indicates one or any combination of the following that:
   beam failure is not detected in transmission reception points or beam failure recovery is not triggered for the transmission reception points;
   beam failure is detected in the transmission reception point to which the control resource pool with an index of 0 corresponds or beam failure recovery is triggered for the transmission reception point to which the control resource pool with an index of 0 corresponds;
   beam failure is detected in the transmission reception point to which the control resource pool with an index of 1 corresponds or beam failure recovery is triggered for the transmission reception point to which the control resource pool with an index of 1 corresponds;
   beam failure is detected both in the transmission reception point to which the control resource pool with an index of 0 corresponds and the transmission reception point to which the control resource pool with an index of 1 corresponds or beam failure recovery is triggered both for the transmission reception point to which the control resource pool with an index of 0 corresponds and the transmission reception point to which the control resource pool with an index of 1 corresponds.
8. The method according to Supplement 2, wherein a value of 2 bits in the MAC CE indicates one or any combination of the following that:
   beam failure is not detected in transmission reception points or beam failure recovery is not triggered for the transmission reception points;
   beam failure is detected in a transmission reception point with an index of 0 or beam failure recovery is triggered for the transmission reception point with an index of 0;
   beam failure is detected in a transmission reception point with an index of 1 or beam failure recovery is triggered for the transmission reception point with an index of 1;
   beam failure is detected both in the transmission reception point with an index of 0 and the transmission reception point with an index of 1 or beam failure recovery is triggered both for the transmission reception point with an index of 0 and the transmission reception point with an index of 1.
9. The method according to Supplement 2, wherein a value of 2 bits in the MAC CE indicates one or any combination of the following that:
   beam failure is not detected in transmission reception points or beam failure recovery is not triggered for the transmission reception points;
   beam failure is detected in a transmission reception point to which a beam failure detection reference signal set (BFD-RS set) with an index of 0 corresponds or beam failure recovery is triggered for the transmission reception point to which a beam failure detection reference signal set (BFD-RS set) with an index of 0 corresponds, or beam failure is detected in all beams to which a beam failure detection reference signal set (BFD-RS set) with an index of 0 corresponds or beam failure recovery is triggered for all beams to which a beam failure detection reference signal set (BFD-RS set) with an index of 0 corresponds;
   beam failure is detected in a transmission reception point to which a beam failure detection reference signal set (BFD-RS set) with an index of 1 corresponds or beam failure recovery is triggered for the transmission reception point to which a beam failure detection reference signal set (BFD-RS set) with an index of 1 corresponds, or beam failure is detected in all beams to which a beam failure detection reference signal set (BFD-RS set) with an index of 1 corresponds or beam failure recovery is triggered for all beams to which a beam failure detection reference signal set (BFD-RS set) with an index of 1 corresponds;
   a beam failure is detected in both the transmission reception point to which the beam failure detection reference signal set (BFD-RS set) with an index of 0 corresponds and the transmission reception point to which the beam failure detection reference signal set (BFD-RS set) with an index of 1 corresponds or beam failure recovery is triggered for both the transmission reception point to which the beam failure detection reference signal set (BFD-RS set) with an index of 0 corresponds and the transmission reception point to which the beam failure detection reference signal set (BFD-RS set) with an index of 1 corresponds, or a beam failure is detected in all beams to which the beam failure detection reference signal set (BFD-RS set) with an index of 0 corresponds and all beams to which the beam failure detection reference signal set (BFD-RS set) with an index of 1 corresponds or beam failure recovery is triggered for all beams to which the beam failure detection reference signal set (BFD-RS set) with an index of 0 corresponds and all beams to which the beam failure detection reference signal set (BFD-RS set) with an index of 1 corresponds.
10. The method according to any one of Supplements 2, 7 to 9, wherein R bit(s) in the beam failure recovery MAC CE or the truncated beam failure recovery MAC CE is(are) used to carry/indicate/represent an index of the transmission reception point in which beam failure is detected or for which beam failure recovery is triggered.
11. The method according to any one of Supplements 1 to 10, wherein the MAC CE further includes: a type in which beam failure is detected or a type in which beam failure recovery is triggered.
12. The method according to Supplement 11, wherein 1 bit in the MAC CE indicates a type in which beam failure is detected or a type in which beam failure recovery is triggered,
   a value of the 1 bit indicates that cell-specific beam failures or beam failures of all beams are detected or cell-specific beam failure recovery or beam failure recovery of all beams is triggered, and another value of the 1 bit indicates that transmission reception point (TRP)-specific beam failures or beam failures of a part of beams are detected or TRP-specific beam failure recovery or beam failure recovery of a part of beams is triggered; or
   a value of the 1 bit indicates that cell-specific beam failures or beam failures of all beams are detected or cell-specific beam failure recovery or beam failure recovery of all beams is triggered, and another value of the 1 bit indicates that non-cell-specific beam failures or beam failures of not all beams are detected or non-cell-specific beam failure recovery or beam failure recovery of not all beam is triggered; or
   a value of the 1 bit indicates that TRP-specific beam failures or beam failures of a part of beams are detected or TRP-specific beam failure recovery or beam failure recovery of a part of beams is triggered, and another value of the 1 bit indicates that non-TRP-specific beam failures or beam failures of not a part of beams are detected or non-TRP-specific beam failure recovery or beam failure recovery of not a part of beams is triggered.
13. The method according to Supplement 12, wherein R bit(s) in the beam failure recovery MAC CE or the truncated beam failure recovery (truncated BFR) MAC CE is(are) used to carry/indicate/represent a type in which beam failure is detected or a type in which beam failure recovery is triggered.
14. The method according to Supplement 11, wherein 2 bit in the MAC CE indicates a type in which beam failure is detected or a type in which beam failure recovery is triggered,
   a value of the 2 bits indicates that cell-specific beam failures or beam failures of all beams are not detected or cell-specific beam failure recovery or beam failure recovery of all beams is not triggered, and TRP-specific beam failures or beam failures of a part of beams are not detected or TRP-specific beam failure recovery or beam failure recovery of a part of beams is not triggered; another value of the 2 bits indicates that cell-specific beam failures or beam failures of all beams are detected or cell-specific beam failure recovery or beam failure recovery of all beams is triggered; a further value of the 2 bits indicates that TRP-specific beam failures or beam failures of a part of beams are detected or TRP-specific beam failure recovery or beam failure recovery of a part of beams is triggered; yet another value of the 2 bits indicates that cell-specific beam failures or beam failures of all beams are detected or cell-specific beam failure recovery or beam failure recovery of all beams is triggered, and TRP-specific beam failures or beam failures of a part of beams are detected or TRP-specific beam failure recovery or beam failure recovery of a part of beams is triggered;
   a value of the 2 bits indicating that cell-specific beam failures or beam failures of all beams are not detected or cell-specific beam failure recovery or beam failure recovery of all beams is not triggered, and non-cell-specific beam failures or beam failures of not all beams are not detected or non-cell-specific beam failure recovery or beam failure recovery of not all beams is not triggered; another value of the 2 bits indicating that cell-specific beam failures or beam failures of all beams are detected or cell-specific beam failure recovery or beam failure recovery of all beams is triggered; a further value of the 2 bits indicating that non-cell-specific beam failures or beam failures of not all beams are detected or non-cell-specific beam failure recovery or beam failure recovery of not all beams is triggered; yet another value of the 2 bits indicating that cell-specific beam failures or beam failures of all beams are detected or cell-specific beam failure recovery or beam failure recovery of all beams is triggered, and non-cell-specific beam failures or beam failures of not all beams are detected or non-cell-specific beam failure recovery or beam failure recovery of not all beams is triggered; and
   a value of the 2 bits indicates that non-TRP-specific beam failures or beam failures of not a part of beams are not detected or non-TRP-specific beam failure recovery or beam failure recovery of not a part of beams is not triggered, and TRP-specific beam failures or beam failures of a part of beams are not detected or TRP-specific beam failure recovery or beam failure recovery of a part of beams is not triggered; another value of the 2 bits indicates that non-TRP-specific beam failures or beam failures of not a part of beams are detected or non-TRP-specific beam failure recovery or beam failure recovery of not a part of beams is triggered; another value of the 2 bits indicates that TRP-specific beam failures or beam failures of a part of beams are detected or TRP-specific beam failure recovery or beam failure recovery of a part of beams is triggered; another value of the 2 bits indicates that non-TRP-specific beam failures or beam failures of not a part of beams are detected or non-TRP-specific beam failure recovery or beam failure recovery of not a part of beams is triggered, and TRP-specific beam failures or beam failures of a part of beams are detected or TRP-specific beam failure recovery or beam failure recovery of a part of beams is triggered.
15. The method according to Supplement 14, wherein R bit(s) and AC field(s) in the beam failure recovery MAC CE or the truncated beam failure recovery (truncated BFR) MAC CE are used to carry/indicate/represent a type in which beam failure is detected or a type in which beam failure recovery is triggered.
16. The method according to any one of Supplements 1 to 15, wherein the MAC CE further includes at least one or any combination of the following information: information of a cell to which the transmission reception point where a beam failure is detected or beam failure recovery is triggered belongs, whether information of candidate beams is found, and information of candidate beams.
17. The method according to any one of Supplements 1 to 16, wherein the MAC CE is identified by a MAC subheader of a logic channel identifier (LCID) or an enhanced logic channel identifier (eLCID).
18. The method according to any one of Supplements 1 to 17, wherein the method further includes:
   transmitting, by the terminal equipment, the MAC CE to a network device,
   wherein the MAC CE is transferred to the network device via another transmission reception point of the cell to which the transmission reception point belongs, or the MAC CE is transferred to the network device via a transmission reception point of a cell different from the cell to which the transmission reception point belongs co-located with the transmission reception point, or the MAC CE is reported to the network device via a cell different from the cell to which the transmission reception point belongs.
19. The method according to any one of Supplements 1 to 18, wherein the terminal equipment transmits the MAC CE using one of the following uplink grants:
   an uplink grant of a TRP where a TRP-specific beam failure is not detected of a cell to which the TRP where a TRP-specific beam failure is detected belongs;
   an uplink grant of the TRP of a cell different from the cell to which the TRP where a TRP-specific beam failure is detected belongs co-located with the TRP where a TRP-specific beam failure is detected;
   an uplink grant of the cell different from the cell to which the TRP where a TRP-specific beam failure is detected belongs.
20. The method according to any one of Supplements 1 to 19, wherein in a case where there are a plurality of available resources, the terminal equipment selects an uplink grant to transmit the MAC CE based on a predefined or network configuration, or selects an uplink grant to transmit the MAC CE based on implementation or randomly selects an uplink grant to transmit the MAC CE.
21. The method according to any one of Supplements 1 to 20, wherein the terminal equipment generates a medium access control (MAC) control element (CE), including: a medium access control (MAC) entity of the terminal equipment instructs a multiplexing and assembly procedure to generate a TRP-specific MAC CE;
   the MAC CE includes the TRP-specific MAC CE, the TRP-specific MAC CE is different from a cell-specific MAC CE.
22. The method according to Supplement 21, wherein the TRP-specific MAC CE is generated using a procedure independent of a procedure for generating the cell-specific MAC CE.
23. The method according to Supplement 21, wherein a truncated TRP-specific beam failure recovery MAC CE is supported; a procedure for generating a TRP-specific beam failure recovery MAC CE includes:
   the MAC entity shall:
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled.
24. The method according to Supplement 21, wherein a truncated TRP-specific beam failure recovery MAC CE is not supported; a procedure for generating the TRP-specific beam failure recovery MAC CE includes:
   the MAC entity shall:
   if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
   else, trigger a scheduling request (SR) for TRP-specific beam failure recovery for each TRP for which the BFR has been triggered, not cancelled.
25. The method according to Supplement 21, wherein the cell-specific MAC CE and the TRP-specific MAC CE are generated using one procedure.
26. The method according to Supplement 25, wherein a truncated TRP-specific beam failure recovery MAC CE is supported; and the TRP-specific beam failure recovery MAC CE is preferably generated.
27. The method according to Supplement 26, wherein
   the MAC entity shall:
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled;
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
28. The method according to Supplement 26, wherein
   the MAC entity shall:
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled;
   if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
29. The method according to Supplement 25, wherein a truncated TRP-specific beam failure recovery MAC CE is supported; and the cell-specific beam failure recovery MAC CE is preferably generated.
30. The method according to Supplement 29, wherein
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled;
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled.
31. The method according to Supplement 29, wherein
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled;
   if uplink resources are available for a new transmission and if the uplink resources can accommodate a truncated TRP-specific beam failure recovery MAC CE plus its subheader as a result of LCP, instruct a multiplexing and assembly entity to generate the truncated TRP-specific beam failure recovery MAC CE;
   else, trigger a scheduling request (SR) for TRP-specific beam failure recovery for each TRP for which the BFR has been triggered, not cancelled.
32. The method according to Supplement 25, wherein a truncated TRP-specific beam failure recovery MAC CE is supported; a priority of the TRP-specific beam failure recovery MAC CE is identical with that of the cell-specific beam failure recovery MAC CE.
33. The method according to Supplement 32, wherein
   the MAC entity shall:
   if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
   else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
   else if uplink resources are available for a new transmission and if the uplink resources can accommodate a truncated cell-specific beam failure recovery MAC CE plus its subheader and a truncated TRP-specific beam failure recovery MAC CE plus its subheader as a result of LCP, instruct a multiplexing and assembly procedure to generate the truncated cell-specific beam failure recovery MAC CE and the truncated TRP-specific beam failure recovery MAC CE;
   else if uplink resources are available for a new transmission and if the uplink resources can accommodate a truncated cell-specific beam failure recovery MAC CE plus its subheader or a truncated TRP-specific beam failure recovery MAC CE plus its subheader as a result of LCP, instruct a multiplexing and assembly procedure to generate the truncated cell-specific beam failure recovery MAC CE or the truncated TRP-specific beam failure recovery MAC CE;
   else, trigger a scheduling request (SR) for TRP-specific beam failure recovery for each TRP for which the BFR has been triggered, not cancelled, and a scheduling request (SR) for cell-specific beam failure recovery for each cell for which the BFR has been triggered, not cancelled.
34. The method according to Supplement 25, wherein a truncated TRP-specific beam failure recovery MAC CE is not supported; and the TRP-specific beam failure recovery MAC CE is preferably generated.
35. The method according to Supplement 34, wherein
   the MAC entity shall:
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled;
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
36. The method according to Supplement 25, wherein a truncated TRP-specific beam failure recovery MAC CE is not supported; and the cell-specific beam failure recovery MAC CE is preferably generated.
37. The method according to Supplement 36, wherein
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled;
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled.
38. The method according to Supplement 36, wherein
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled.
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
39. The method according to Supplement 25, wherein a truncated TRP-specific beam failure recovery MAC CE is not supported; a priority of the TRP-specific beam failure recovery MAC CE is identical with that of the cell-specific beam failure recovery MAC CE.
40. The method according to Supplement 39, wherein
   the MAC entity shall:
   if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
   else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
   else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.
41. The method according to any one of Supplements 21 to 40, wherein a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds;
   or, a priority of a logical channel to which the transmission reception point-specific beam failure recovery MAC CE corresponds is identical to a priority of a logical channel to which the cell-specific beam failure recovery MAC CE corresponds;
   or, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds;
   or, a priority of a logical channel to which the transmission reception point-specific beam failure recovery MAC CE corresponds is identical to a priority of a logical channel to which a Sidelink Configured Grant Confirmation MAC CE corresponds;
   or, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds;
   or, a priority of a logical channel to which the transmission reception point-specific beam failure recovery MAC CE corresponds is identical to a priority of a logical channel to which an LBT failure MAC CE corresponds;
   or, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.
42. The method according to any one of Supplements 1 to 41, wherein information of candidate beams including an index of a synchronization signal block (SSB) or an index of a channel state information reference signal (CSI-RS), or the information of candidate beams indicating an order of occurrence in a configured beam list.
43. The method according to Supplement 42, wherein the candidate beams satisfy at least one of the following conditions that:
   the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
   reference signal received power (RSRP) is higher than a configured threshold;
   a signal to interference plus noise ratio (SINR) is higher than a configured threshold;
   a received signal strength indicator (RSSI) is higher than a configured threshold;
   beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs; or
   measurement values of the beams/RSs paired therewith are higher than a configured threshold.
44. The method according to Supplement 42, wherein the terminal equipment may select based on the implementation or arbitrarily select one or N of a plurality of candidate beams, or select one or N with the highest measurement value, or select one or N with the highest measurement value and with a measurement value of beams/RSs paired therewith being higher than a configured threshold, or select one or N with the highest measurement value and with the highest measurement value of beams/RSs paired therewith, N is an integer greater than 1.
45. A method for reporting beam failure information, including:
   detecting, by a terminal equipment, that a beam failure occurs in a link with a transmission reception point (TRP) or beam failure recovery of the transmission reception point is triggered; and
   indicating to a network device information that a beam failure is detected or beam failure recovery is triggered via another transmission reception point of a cell to which the transmission reception point belongs.
46. The method according to Supplement 45, wherein the information that a beam failure is detected or beam failure recovery is triggered is included in a transmission reception point-specific beam failure recovery MAC CE.
47. The method according to Supplement 46, wherein the information that a beam failure is detected or beam failure recovery is triggered includes: indication information indicating whether candidate beams are found.
48. The method according to Supplement 47, wherein a value of 1 bit of the information that a beam failure is detected or beam failure recovery is triggered indicates that candidate beams are configured and found, or indicates that candidate beams are configured and the MAC CE includes information of the candidate beams, or indicates that the MAC CE includes information of the candidate beams.
49. The method according to any one of Supplements 45 to 48, wherein the information that a beam failure is detected or beam failure recovery is triggered further includes: information of candidate beams.
50. The method according to Supplement 49, wherein the information of candidate beams indicates a reference signal.
51. The method according to Supplement 49 or 50, wherein the information of candidate beams including an index of a synchronization signal block (SSB) or an index of a channel state information reference signal (CSI-RS), or the information of candidate beams indicating an order of occurrence in a configured beam list.
52. The method according to Supplement 49 or 50, wherein the candidate beams satisfy at least one of the following conditions that:
   the candidate beams are included in a candidate beam list configured for the TRP where TRP-specific beam failure is detected, or the candidate beams are included in a candidate beam/BFD-RS list configured for the cell to which the TRP where TRP-specific beam failure is detected belongs, or the candidate beams are included in a candidate beam/BFD-RS list configured for another TRP of the cell to which the TRP where TRP-specific beam failure is detected belongs;
   reference signal received power (RSRP) is higher than a configured threshold;
   a signal to interference plus noise ratio (SINR) is higher than a configured threshold;
   a received signal strength indicator (RSSI) is higher than a configured threshold;
   beams/RSs paired therewith are included in the candidate beam list configured for the TRP where TRP-specific beam failure is detected, or beams/RSs paired therewith are included in the candidate beam/BFD-RS list configured for the cell to which the TRP where TRP-specific beam failure is detected belongs, or beams/RSs paired therewith are included in the candidate beam/BFD-RS list configured for another TRP of the cell to which the TRP where TRP-specific beam failure is detected belongs;
   measurement values of the beams/RSs paired therewith are higher than a configured threshold.
53. The method according to Supplement 49 or 50, wherein the terminal equipment may select based on the implementation or arbitrarily select one or N of a plurality of candidate beams, or select one or N with the highest measurement value, or select one or N with the highest measurement value and with a measurement value of beams/RSs paired therewith being higher than a configured threshold, or select one or N with the highest measurement value and with the highest measurement value of beams/RSs paired therewith, N is an integer greater than 1.
54. The method according to any one of Supplements 45 to 53, wherein the information that a beam failure is detected or beam failure recovery is triggered further includes: information of a beam/RS paired with a selected candidate beam.
55. The method according to any one of Supplements 46 to 54, wherein the MAC CE is identified by a MAC subheader of a logic channel identifier (LCID) or an enhanced logic channel identifier (eLCID).
56. The method according to any one of Supplements 46 to 55, wherein a medium access control (MAC) entity of the terminal equipment instructs a multiplexing and assembly procedure to generate a transmission reception point (TRP)-specific beam failure recovery MAC CE;
   the TRP-specific beam failure recovery MAC CE is different from a cell-specific beam failure recovery MAC CE.
57. The method according to Supplement 56, wherein a TRP-specific MAC CE is generated using an independent procedure from procedure of a cell-specific MAC CE.
58. The method according to Supplement 56, wherein a procedure for generating the TRP-specific beam failure recovery MAC CE includes:
   the MAC entity shall:
   if uplink resources are available for a new transmission and if the uplink resources can accommodate the TRP-specific beam failure recovery MAC CE plus its subheader as a result of LCP, instruct a multiplexing and assembly entity to generate the TRP-specific beam failure recovery MAC CE;
   else, trigger a scheduling request (SR) for TRP-specific beam failure recovery for each TRP for which the BFR has been triggered, not cancelled.
59. The method according to Supplement 56, wherein a cell-specific MAC CE and the TRP-specific MAC CE are generated using one procedure.
60. The method according to Supplement 59, wherein the TRP-specific beam failure recovery MAC CE is preferably generated.
61. The method according to Supplement 60, wherein the TRP-specific beam failure recovery MAC CE is preferably generated, including:
   the MAC entity shall:
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled;
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
62. The method according to Supplement 59, wherein the cell-specific beam failure recovery MAC CE is preferably generated.
63. The method according to Supplement 62, wherein the cell-specific beam failure recovery MAC CE is preferably generated, including:
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled;
   if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled.
64. The method according to Supplement 62, wherein
   the MAC entity shall:
   if uplink resources are available for a new transmission and if the uplink resources can accommodate the cell-specific beam failure recovery MAC CE plus its subheader as a result of LCP, instruct a multiplexing and assembly procedure to generate the cell-specific beam failure recovery MAC CE;
   else if uplink resources are available for a new transmission and if the uplink resources can accommodate the TRP-specific beam failure recovery MAC CE plus its subheader as a result of LCP, instruct a multiplexing and assembly procedure to generate the TRP-specific beam failure recovery MAC CE;
   else, trigger a scheduling request (SR) for TRP-specific beam failure recovery for each TRP for which the BFR has been triggered, not cancelled;
   else if uplink resources are available for a new transmission and if the uplink resources can accommodate a truncated cell-specific beam failure recovery MAC CE plus its subheader as a result of LCP, instruct a multiplexing and assembly entity to generate the truncated cell-specific beam failure recovery MAC CE;
   else, trigger a scheduling request (SR) for cell-specific beam failure recovery for each cell for which the BFR has been triggered, not cancelled.
65. The method according to Supplement 59, wherein a priority of the transmission reception point-specific beam failure recovery MAC CE is identical to a priority of the cell-specific beam failure recovery MAC CE.
66. The method according to Supplement 65, wherein
   the MAC entity shall:
   if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
   else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
   else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.
67. The method according to Supplement 65, wherein
   the MAC entity shall:
   if uplink resources are available for a new transmission and if the uplink resources can accommodate the cell-specific beam failure recovery MAC CE plus its subheader and the TRP-specific beam failure recovery MAC CE plus its subheader as a result of LCP, instruct a multiplexing and assembly procedure to generate the cell-specific beam failure recovery MAC CE and the TRP-specific beam failure recovery MAC CE;
   else if uplink resources are available for a new transmission and if the uplink resources can accommodate a truncated cell-specific beam failure recovery MAC CE plus its subheader and the TRP-specific beam failure recovery MAC CE plus its subheader as a result of LCP, instruct a multiplexing and assembly procedure to generate the truncated cell-specific beam failure recovery MAC CE and the TRP-specific beam failure recovery MAC CE;
   else if uplink resources are available for a new transmission and if the uplink resources can accommodate the cell-specific beam failure recovery MAC CE plus its subheader or the TRP-specific beam failure recovery MAC CE plus its subheader as a result of LCP, instruct a multiplexing and assembly procedure to generate the cell-specific beam failure recovery MAC CE or the TRP-specific beam failure recovery MAC CE;
   else if uplink resources are available for a new transmission and if the uplink resources can accommodate a truncated cell-specific beam failure recovery MAC CE plus its subheader as a result of LCP, instruct a multiplexing and assembly procedure to generate the truncated cell-specific beam failure recovery MAC CE;
   else, trigger a scheduling request (SR) for TRP-specific beam failure recovery for each TRP for which the BFR has been triggered, not cancelled, and trigger a scheduling request (SR) for cell-specific beam failure recovery for each cell for which the BFR has been triggered, not cancelled.
68. The method according to any one of Supplements 47 to 67, wherein a priority of a logical channel to which the transmission reception point-specific beam failure recovery MAC CE corresponds is lower than a priority of a logical channel to which a C-RNTI MAC CE or data from an uplink channel (data from UL-CCCH) correspond(s), and is higher than a priority of a logical channel to which the cell-specific beam failure recovery MAC CE corresponds;
   or, a priority of a logical channel to which the transmission reception point-specific beam failure recovery MAC CE corresponds is identical to a priority of a logical channel to which the cell-specific beam failure recovery MAC CE corresponds;
   or, a priority of a logical channel to which the transmission reception point-specific beam failure recovery MAC CE corresponds is lower than a priority of a logical channel to which the cell-specific beam failure recovery MAC CE corresponds, and is higher than a priority of a logical channel to which a Sidelink Configured Grant Confirmation MAC CE corresponds;
   or, a priority of a logical channel to which the transmission reception point-specific beam failure recovery MAC CE corresponds is identical to a priority of a logical channel to which a Sidelink Configured Grant Confirmation MAC CE corresponds;
   or, a priority of a logical channel to which the transmission reception point-specific beam failure recovery MAC CE corresponds is lower than a priority of a logical channel to which a Sidelink Configured Grant Confirmation MAC CE corresponds, and is higher than a priority of a logical channel to which an LBT failure MAC CE corresponds;
   or, a priority of a logical channel to which the transmission reception point-specific beam failure recovery MAC CE corresponds is identical to a priority of a logical channel to which an LBT failure MAC CE corresponds;
   or, a priority of a logical channel to which the transmission reception point-specific beam failure recovery MAC CE corresponds is lower than a priority of a logical channel to which an LBT failure MAC CE corresponds, and is higher than a priority of a logical channel to which a MAC CE for SL-BSR corresponds.
69. A method for reporting beam failure information, including:
   detecting, by a terminal equipment, that a beam failure occurs in a link with a transmission reception point or beam failure recovery of the transmission reception point is triggered; and
   generating a MAC CE according to configuration of carrier aggregation (CA) and/or uplink resources, wherein the MAC CE indicates information of the transmission reception point where beam failure is detected or for which beam failure recovery is triggered, or indicating to a network device information that a beam failure is detected or beam failure recovery is triggered via another transmission reception point of a cell to which the transmission reception point belongs.
70. The method according to Supplement 69, wherein the terminal equipment generates a MAC CE in the case where the carrier aggregation is not configured, wherein the MAC CE indicates information of the transmission reception point in which beam failure is detected or for which beam failure recovery is triggered;
   in the case where the carrier aggregation is configured, the terminal equipment indicates to a network device, information that a beam failure is detected or beam failure recovery is triggered via another transmission reception point of a cell to which the transmission reception point belongs.
71. The method according to Supplement 69, wherein the terminal equipment generates a MAC CE in the case where the carrier aggregation is configured and uplink resources can accommodate the MAC CE, wherein the MAC CE indicates information of the transmission reception point in which beam failure is detected or for which beam failure recovery is triggered;
   in the case where the carrier aggregation is not configured or the carrier aggregation is configured but uplink resources cannot accommodate the MAC CE, the terminal equipment indicates to a network device, information that a beam failure is detected or beam failure recovery is triggered via another transmission reception point of a cell to which the transmission reception point belongs.
72. A method for receiving beam failure information, including:
   receiving, by a network device, a MAC CE transmitted by a terminal equipment, wherein the MAC CE indicates information of the transmission reception point where beam failure is detected or for which beam failure recovery is triggered, or receiving information that a beam failure is detected or beam failure recovery is triggered via another transmission reception point of a cell to which the transmission reception point belongs, indicated by the terminal equipment.
73. A terminal equipment, including a memory and a processor, the memory storing a computer program, and the processor being configured to execute the computer program to realize the method for generating beam failure information according to any one of Supplements 1 to 45 or the method for reporting beam failure information according to any one of Supplements 46-71.
74. A network device, including a memory and a processor, the memory storing a computer program, and the processor being configured to execute the method for receiving beam failure information according to Supplement 72.
75. A communication system, including:
   a terminal equipment, configured to detect that a beam failure occurs in a link with a transmission reception point (TRP) or beam failure recovery of the transmission reception point is triggered; and generate a medium access control (MAC) control element (CE), wherein the MAC CE indicates information of the transmission reception point in which beam failure is detected or for which beam failure recovery is triggered; and
   a network device, configured to receive information of the transmission reception point in which beam failure is detected or for which beam failure recovery is triggered.
76. A communication system, including:
   a terminal equipment, configured to detect that a beam failure occurs in a link with a transmission reception point or beam failure recovery of the transmission reception point is triggered; and to indicate to a network device information that a beam failure is detected or beam failure recovery is triggered via another transmission reception point of a cell to which the transmission reception point belongs; and
   a network device, configured to receive the information that a beam failure is detected or beam failure recovery is triggered.

## Claims

1. An apparatus for generating beam failure information, comprising:
a detecting unit configured to detect that a beam failure occurs in a link with a transmission reception point (TRP) or beam failure recovery of the transmission reception point is triggered; and
a processing unit configured to generate a medium access control control element, wherein the medium access control control element indicates information of the transmission reception point in which beam failure is detected or for which beam failure recovery is triggered.

2. The apparatus according to claim 1, wherein the information of the transmission reception point comprises: an index or an identifier of the transmission reception point in which beam failure is detected or for which beam failure recovery is triggered.

3. The apparatus according to claim 2, wherein a value of 1 bit in the medium access control control element indicates that a beam failure is detected in a transmission reception point to which a control resource pool with an index of 0 corresponds or beam failure recovery is triggered for the transmission reception point to which a control resource pool with an index of 0 corresponds, and another value of the 1 bit therein indicates that a beam failure is detected in a transmission reception point to which a control resource pool with an index of 1 corresponds or beam failure recovery is triggered for the transmission reception point to which a control resource pool with an index of 1 corresponds;
or,
a value of 1 bit in the medium access control control element indicates that a beam failure is detected in a transmission reception point with an index of 0 or beam failure recovery is triggered for the transmission reception point with an index of 0, and another value of the 1 bit therein indicates that a beam failure is detected in a transmission reception point with an index of 1 or beam failure recovery is triggered for the transmission reception point with an index of 1;
or,
a value of 1 bit in the medium access control control element indicates that a beam failure is detected in a transmission reception point to which a beam failure detection reference signal set with an index of 0 corresponds or beam failure recovery is triggered for the transmission reception point to which a beam failure detection reference signal set with an index of 0 corresponds, or indicates that a beam failure is detected in all beams to which a beam failure detection reference signal set with an index of 0 corresponds or beam failure recovery is triggered for all beams to which a beam failure detection reference signal set with an index of 0 corresponds,
and another value of the 1 bit therein indicates that a beam failure is detected in a transmission reception point to which a beam failure detection reference signal set with an index of 1 corresponds or beam failure recovery is triggered for the transmission reception point to which a beam failure detection reference signal set with an index of 1 corresponds, or indicates that a beam failure is detected in all beams to which a beam failure detection reference signal set with an index of 1 corresponds or beam failure recovery is triggered for all beams to which a beam failure detection reference signal set with an index of 1 corresponds.

4. The apparatus according to claim 2, wherein a value of 2 bits in the medium access control control element indicates one or any combination of the following that:
a beam failure is not detected in a transmission reception point or beam failure recovery is not triggered for a transmission reception point;
a beam failure is detected in a transmission reception point to which a control resource pool with an index of 0 corresponds or beam failure recovery is triggered for a transmission reception point to which a control resource pool with an index of 0 corresponds;
a beam failure is detected in a transmission reception point to which a control resource pool with an index of 1 corresponds or beam failure recovery is triggered for a transmission reception point to which a control resource pool with an index of 1 corresponds;
a beam failure is detected both in a transmission reception point to which a control resource pool with an index of 0 corresponds and a transmission reception point to which a control resource pool with an index of 1 corresponds or beam failure recovery is triggered both for a transmission reception point to which a control resource pool with an index of 0 corresponds and a transmission reception point to which a control resource pool with an index of 1 corresponds;
or, a value of 2 bits in the medium access control control element indicates one or any combination of the following that:
a beam failure is not detected in a transmission reception point or beam failure recovery is not triggered for a transmission reception point;
a beam failure is detected in a transmission reception point with an index of 0 or beam failure recovery is triggered for a transmission reception point with an index of 0;
a beam failure is detected in a transmission reception point with an index of 1 or beam failure recovery is triggered for a transmission reception point with an index of 1;
a beam failure is detected both in a transmission reception point with an index of 0 and a transmission reception point with an index of 1 or beam failure recovery is triggered both for a transmission reception point with an index of 0 and a transmission reception point with an index of 1;
or, a value of 2 bits in the medium access control control element indicates one or any combination of the following that:
a beam failure is not detected in a transmission reception point or beam failure recovery is not triggered for a transmission reception point;
a beam failure is detected in a transmission reception point to which a beam failure detection reference signal set with an index of 0 corresponds or beam failure recovery is triggered for a transmission reception point to which a beam failure detection reference signal set with an index of 0 corresponds, or a beam failures is detected in all beams to which a beam failure detection reference signal set with an index of 0 corresponds or beam failure recovery is triggered for all beams to which a beam failure detection reference signal set with an index of 0 corresponds;
a beam failure is detected in a transmission reception point to which a beam failure detection reference signal set with an index of 1 corresponds or beam failure recovery is triggered for a transmission reception point to which a beam failure detection reference signal set with an index of 1 corresponds, or a beam failure is detected in all beams to which a beam failure detection reference signal set with an index of 1 corresponds or beam failure recovery is triggered for all beams to which a beam failure detection reference signal set with an index of 1 corresponds;
a beam failure is detected in both a transmission reception point to which a beam failure detection reference signal set with an index of 0 corresponds and a transmission reception point to which a beam failure detection reference signal set with an index of 1 corresponds or beam failure recovery is triggered for both a transmission reception point to which the beam failure detection reference signal set with an index of 0 corresponds and a transmission reception point to which the beam failure detection reference signal set with an index of 1 corresponds, or a beam failure is detected in all beams to which the beam failure detection reference signal set with an index of 0 corresponds and all beams to which the beam failure detection reference signal set with an index of 1 corresponds or beam failure recovery is triggered for all beams to which the beam failure detection reference signal set with an index of 0 corresponds and all beams to which the beam failure detection reference signal set with an index of 1 corresponds.

5. The apparatus according to claim 2, wherein R bit(s) in a beam failure recovery medium access control control element or a truncated beam failure recovery medium access control control element is(are) used to carry/indicate/represent an index of the transmission reception point in which beam failure is detected or for which beam failure recovery is triggered;
or,
R bit(s) and AC field(s) in a beam failure recovery medium access control control element or a truncated beam failure recovery medium access control control element are used to carry/indicate/represent an index of the transmission reception point in which beam failure is detected or for which beam failure recovery is triggered.

6. The apparatus according to claim 1, wherein the medium access control control element comprises: a type of a detected beam failure or a type of triggered beam failure recovery.

7. The apparatus according to claim 6, wherein 1 bit in the medium access control control element indicates the type of a detected beam failure or the type of triggered beam failure recovery,
a value of the 1 bit indicating that cell-specific beam failures or beam failures of all beams are detected or cell-specific beam failure recovery or beam failure recovery of all beams is triggered, and another value of the 1 bit indicating that transmission reception point-specific beam failures or beam failures of a part of beams are detected or transmission reception point-specific beam failure recovery or beam failure recovery of a part of beams is triggered; or
a value of the 1 bit indicating that cell-specific beam failures or beam failures of all beams are detected or cell-specific beam failure recovery or beam failure recovery of all beams is triggered, and another value of the 1 bit indicating that non-cell-specific beam failures or beam failures of not all beams are detected or non-cell-specific beam failure recovery or beam failure recovery of not all beam is triggered; or
a value of the 1 bit indicating that transmission reception point-specific beam failures or beam failures of a part of beams are detected or transmission reception point-specific beam failure recovery or beam failure recovery of a part of beams is triggered, and another value of the 1 bit indicating that non-transmission reception point-specific beam failures or beam failures of not a part of beams are detected or non-transmission reception point-specific beam failure recovery or beam failure recovery of not a part of beams is triggered.

8. The apparatus according to claim 6, wherein 2 bits in the medium access control control element indicate the type of a detected beam failure or the type of triggered beam failure recovery,
a value of the 2 bits indicating that cell-specific beam failures or beam failures of all beams are not detected or cell-specific beam failure recovery or beam failure recovery of all beams is not triggered, and transmission reception point-specific beam failures or beam failures of a part of beams are not detected or transmission reception point-specific beam failure recovery or beam failure recovery of a part of beams is not triggered; another value of the 2 bits indicating that cell-specific beam failures or beam failures of all beams are detected or cell-specific beam failure recovery or beam failure recovery of all beams is triggered; a further value of the 2 bits indicating that transmission reception point-specific beam failures or beam failures of a part of beams are detected or transmission reception point-specific beam failure recovery or beam failure recovery of a part of beams is triggered; yet another value of the 2 bits indicating that cell-specific beam failures or beam failures of all beams are detected or cell-specific beam failure recovery or beam failure recovery of all beams is triggered, and transmission reception point-specific beam failures or beam failures of a part of beams are detected or transmission reception point-specific beam failure recovery or beam failure recovery of a part of beams is triggered;
a value of the 2 bits indicating that cell-specific beam failures or beam failures of all beams are not detected or cell-specific beam failure recovery or beam failure recovery of all beams is not triggered, and non-cell-specific beam failures or beam failures of not all beams are not detected or non-cell-specific beam failure recovery or beam failure recovery of not all beams is not triggered; another value of the 2 bits indicating that cell-specific beam failures or beam failures of all beams are detected or cell-specific beam failure recovery or beam failure recovery of all beams is triggered; a further value of the 2 bits indicating that non-cell-specific beam failures or beam failures of not all beams are detected or non-cell-specific beam failure recovery or beam failure recovery of not all beams is triggered; yet another value of the 2 bits indicating that cell-specific beam failures or beam failures of all beams are detected or cell-specific beam failure recovery or beam failure recovery of all beams is triggered, and non-cell-specific beam failures or beam failures of not all beams are detected or non-cell-specific beam failure recovery or beam failure recovery of not all beams is triggered; and
a value of the 2 bits indicating that non-transmission reception point-specific beam failures or beam failures of not a part of beams are not detected or non-transmission reception point-specific beam failure recovery or beam failure recovery of not a part of beams is not triggered, and transmission reception point-specific beam failures or beam failures of a part of beams are not detected or transmission reception point-specific beam failure recovery or beam failure recovery of a part of beams is not triggered; another value of the 2 bits indicating that non-transmission reception point-specific beam failures or beam failures of not a part of beams are detected or non-transmission reception point-specific beam failure recovery or beam failure recovery of not a part of beams is triggered; a further value of the 2 bits indicating that transmission reception point-specific beam failures or beam failures of a part of beams are detected or transmission reception point-specific beam failure recovery or beam failure recovery of a part of beams is triggered; yet another value of the 2 bits indicating that non-transmission reception point-specific beam failures or beam failures of not a part of beams are detected or non-transmission reception point-specific beam failure recovery or beam failure recovery of not a part of beams is triggered, and transmission reception point-specific beam failures or beam failures of a part of beams are detected or transmission reception point-specific beam failure recovery or beam failure recovery of a part of beams is triggered.

9. The apparatus according to claim 6, wherein R bit(s) in a beam failure recovery medium access control control element or a truncated beam failure recovery medium access control control element is(are) used to carry/indicate/represent the type of a detected beam failure or the type of triggered beam failure recovery;
or,
R bit(s) and AC field(s) in a beam failure recovery medium access control control element or a truncated beam failure recovery medium access control control element are used to carry/indicate/represent the type of a detected beam failure or the type of triggered beam failure recovery.

10. The apparatus according to claim 1, wherein the medium access control control element comprises at least one or any combination of the following information: information of a cell to which the transmission reception point in which a beam failure is detected or for which beam failure recovery is triggered belongs, whether information of candidate beams is found, and information of the candidate beams.

11. The apparatus according to claim 1, wherein the apparatus further comprises:
a transmitting unit configured to transmit the medium access control control element to a network device,
wherein the medium access control control element is transferred to the network device via another transmission reception point of a cell to which the transmission reception point belongs, or the medium access control control element is transferred to the network device via a transmission reception point, co-located with the transmission reception point, of a cell different from a cell to which the transmission reception point belongs, or the medium access control control element is reported to the network device via a cell different from a cell to which the transmission reception point belongs.

12. The apparatus according to claim 11, wherein the transmitting unit transmits the medium access control control element by using one of the following uplink grants:
an uplink grant of a transmission reception point where a transmission reception point-specific beam failure is not detected of a cell to which the transmission reception point where a transmission reception point-specific beam failure is detected belongs;
an uplink grant of the transmission reception point, co-located with a transmission reception point where a transmission reception point-specific beam failure is detected, of a cell different from a cell to which the transmission reception point where a transmission reception point-specific beam failure is detected belongs;
an uplink grant of a cell different from a cell to which a transmission reception point where a transmission reception point-specific beam failure is detected belongs.

13. The apparatus according to claim 1, wherein a media access control entity instructs a multiplexing and assembly procedure to generate a transmission reception point-specific media access control control element;
the transmission reception point-specific media access control control element being different from a cell-specific medium access control control element.

14. The apparatus according to claim 13, the transmission reception point-specific medium access control control element is generated by using an independent procedure from a procedure of the cell-specific medium access control control element;
or, the cell-specific medium access control control element and the transmission reception point-specific medium access control control element are generated by using one procedure.

15. The apparatus according to claim 13, wherein a priority of a logical channel to which a transmission reception point-specific beam failure recovery medium access control control element corresponds is lower than a priority of a logical channel to which a Cell-Radio Network Temporary Identifier C-RNTI medium access control control element or data from an uplink channel correspond(s), and is higher than a priority of a logical channel to which a cell-specific beam failure recovery medium access control control element corresponds;
or, a priority of a logical channel to which a transmission reception point-specific beam failure recovery medium access control control element corresponds is identical to a priority of a logical channel to which a cell-specific beam failure recovery medium access control control element corresponds;
or, a priority of a logical channel to which a transmission reception point-specific beam failure recovery medium access control control element corresponds is lower than a priority of a logical channel to which a cell-specific beam failure recovery medium access control control element corresponds, and is higher than a priority of a logical channel to which a Sidelink Configured Grant Confirmation medium access control control element corresponds;
or, a priority of a logical channel to which a transmission reception point-specific beam failure recovery medium access control control element corresponds is identical to a priority of a logical channel to which a Sidelink Configured Grant Confirmation medium access control control element corresponds;
or, a priority of a logical channel to which a transmission reception point-specific beam failure recovery medium access control control element corresponds is lower than a priority of a logical channel to which a Sidelink Configured Grant Confirmation medium access control control element corresponds, and is higher than a priority of a logical channel to which a listen before talk (LBT) failure medium access control control element corresponds;
or, a priority of a logical channel to which a transmission reception point-specific beam failure recovery medium access control control element corresponds is identical to a priority of a logical channel to which an LBT failure medium access control control element corresponds;
or, a priority of a logical channel to which a transmission reception point-specific beam failure recovery medium access control control element corresponds is lower than a priority of a logical channel to which an LBT failure medium access control control element corresponds, and is higher than a priority of a logical channel to which a medium access control control element for SL-BSR corresponds.

16. The apparatus according to claim 1, wherein the medium access control control element comprises: information of candidate beams,
the information of candidate beams comprising an index of a synchronization signal block or an index of a channel state information reference signal, or the information of candidate beams indicating an order of occurrence in configured candidate beams;
and the candidate beams satisfying at least one of the following conditions that:
the candidate beams are included in a candidate beam list configured for the transmission reception point where transmission reception point-specific beam failure is detected, or the candidate beams are included in a candidate beam/ beam failure detection reference signal BFD-RS list configured for a cell to which the transmission reception point where transmission reception point-specific beam failure is detected belongs, or the candidate beams are included in a candidate beam/BFD-RS list configured for another transmission reception point of a cell to which the transmission reception point where transmission reception point-specific beam failure is detected belongs;
reference signal received power is higher than a configured threshold;
a signal to interference plus noise ratio is higher than a configured threshold;
a received signal strength indicator is higher than a configured threshold;
beams/reference signals paired therewith are included in the candidate beam list configured for the transmission reception point where transmission reception point-specific beam failure is detected, or beams/reference signals paired therewith are included in the candidate beam/BFD-RS list configured for the cell to which the transmission reception point where transmission reception point-specific beam failure is detected belongs, or beams/reference signals paired therewith are included in the candidate beam/BFD-RS list configured for another transmission reception point of the cell to which the transmission reception point where transmission reception point-specific beam failure is detected belongs;
measurement values of the beams/reference signals paired therewith are higher than a configured threshold.

17. An apparatus for reporting beam failure information, comprising:
a detecting unit configured to detect that a beam failure occurs in a link with a transmission reception point or beam failure recovery of the transmission reception point is triggered; and
a transmitting unit configured to indicate to a network device information that a beam failure is detected or beam failure recovery is triggered via another transmission reception point of a cell to which the transmission reception point belongs.

18. The apparatus according to claim 17, wherein the information that a beam failure is detected or beam failure recovery is triggered is included in a transmission reception point-specific beam failure recovery medium access control control element.

19. The apparatus according to claim 18, wherein the information that a beam failure is detected or beam failure recovery is triggered comprises: indication information indicating whether candidate beams or candidate reference signals are found,
wherein a value of 1 bit of the information that a beam failure is detected or beam failure recovery is triggered indicates that candidate beams are configured and found, or indicates that candidate beams are configured and the medium access control control element comprises information of the candidate beams, or indicates that the medium access control control element comprises information of the candidate beams.

20. An apparatus for reporting beam failure information, comprising:
a detecting unit configured to detect that a beam failure occurs in a link with a transmission reception point or beam failure recovery of the transmission reception point is triggered; and
a transmitting unit configured to generate a medium access control control element according to configuration of carrier aggregation and/or uplink resources, wherein the medium access control control element indicates information of the transmission reception point where beam failure is detected or for which beam failure recovery is triggered, or indicates to a network device information that a beam failure is detected or beam failure recovery is triggered via another transmission reception point of a cell to which the transmission reception point belongs.
